# EUROPEAN PATENT APPLICATION

(11) **EP 4 599 956 A1**
(43) Date of publication of application: **13.08.2025**
(21) Application number: 23891147.3
(22) Date of filing: 12.09.2023
(51) Int. Cl.: B21D 22/00

(54) **METHOD, DEVICE, AND PROGRAM FOR PREDICTING CHANGE IN SHAPE OF PRESS-FORMED ARTICLE, AND METHOD FOR MANUFACTURING PRESS-FORMED ARTICLE**

(30) Priority: 16.11.2022 JP 2022183039
(71) Applicant: JFE Steel Corporation, Tokyo 100-0011 (JP)
(72) Inventor: URABE, Masaki, Tokyo 100-0011 (JP); NAKAMOTO, Taira, Tokyo 100-0011 (JP); FUJII, Yusuke, Tokyo 100-0011 (JP)
(74) Representative: Hoffmann Eitle
(86) International application number: PCT/JP2023/033173
(87) International publication number: WO 2024/105988

(57) **Abstract**

A press formed part shape change predicting method according to the present invention includes: a step (S1) of acquiring stress and strain of a press formed part at a forming bottom dead center; a step (S3) of acquiring residual stress and strain of the press formed part immediately after springback; a step (S5) of setting the residual stress after stress relaxation by acquiring a stress relaxation amount reflecting a stress-strain change history before and after springback and adding the stress relaxation amount to a value of the residual stress of the press formed part immediately after the springback; and a step (S7) of obtaining a shape in which moments of forces are balanced for the press formed part in which the residual stress after stress relaxation is set.

## Description

### Field

The present invention relates to a press formed part shape change predicting method, a device, and a program that predicts a shape change of a press formed part with time after springback at the moment of die release from a press forming die. The present invention further relates to a press formed part manufacturing method for manufacturing a press formed part such that the shape of the press formed part, which has changed with time after springback at the moment of die release from a press forming die, falls within a predetermined range.

### Background

Press forming is a manufacturing method capable of manufacturing a metal part at low cost in a short time and is used for manufacturing many automotive parts. In recent years, in order to achieve both collision safety of automobiles and weight reduction of automotive bodies, metal sheets having higher strength are used for automotive parts. One of the main problems in press forming a highstrength metal sheet is a decrease in dimensional accuracy due to springback. A phenomenon in which residual stress generated in a press formed part when a metal sheet is deformed by press forming turns into a driving force and the press formed part released from the press forming die instantaneously returns to the shape of the metal sheet before the press forming like a spring is called springback. Since the residual stress generated during the press forming is larger as the strength of the metal sheet is higher (for example, a high-tensile steel sheet), the shape change due to the springback is also significant. Therefore, it is more difficult to keep the shape after springback within prescribed dimensions as the metal sheet has higher strength. Therefore, technology for accurately predicting the shape change of a press formed part due to springback is important.

For prediction of a shape change due to springback, use of press forming simulation by a finite element method is common. The procedure in the press forming simulation is divided into two stages. First, in a first stage, press forming analysis in a process of press-forming a metal sheet up to the forming bottom dead center is performed to predict the residual stress of the press formed part at the forming bottom dead center (for example, Patent Literature 1). In a following second stage, springback analysis is performed in a process in which the shape of the press formed part released (taken out) from a press forming die changes due to springback, and the shape in which the moment of force and the residual stress in the released press formed part are balanced is predicted (for example, Patent Literature 2).

In the related art, the shape of a press formed part released from a press forming die and sprung back is predicted by performing press forming simulation in which the first-stage press forming analysis and the second-stage spring-back analysis are integrated. However, there are press formed parts whose shape prediction accuracy by the press forming simulation is low when the shape of the press formed part predicted by the press forming simulation is compared with the shape of a press formed part that is actually press-formed.

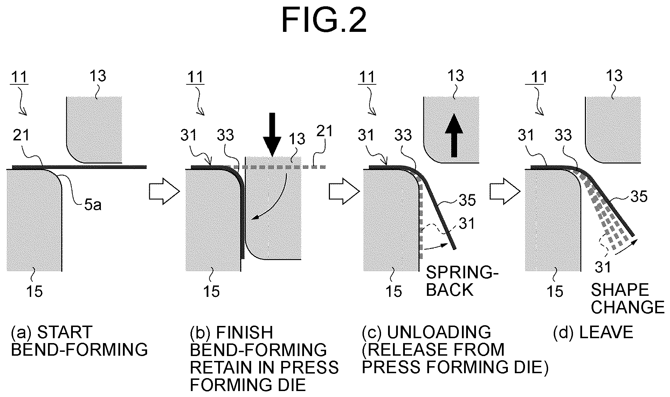

As an example of the press formed part having low shape prediction accuracy, there is a plate press-bend-formed part 31 in which a bent portion 33 is formed by performing press forming (bend forming) on a metal sheet 21 using a press forming die 11 including a punch 13 and a die 15 as illustrated in FIG. 2. The shape of the plate press-bend-formed part 31 varies between immediately after die released from the press forming die 11 and springback and after elapse of several days due to deformation of the bent portion 33.

Such a shape change of the plate press-bend-formed part 31 with the lapse of each time unit appears to be quite similar to a phenomenon in which a structural member continuously receiving a high load from the outside is gradually deformed (for example, Patent Literature 3) such as the creep phenomenon. However, as in the plate press-bend-formed part 31 described above, the shape change that occurs in a press formed part with the lapse of time after springback is a phenomenon that occurs without receiving a load from the outside, and an analysis method that handles the shape change due to the creep phenomenon cannot be applied.

Therefore, for example, Patent Literature 4 discloses a method of predicting a shape change of a press formed part with lapse of each unit of time after springback at the moment when the press formed part has been released from a press forming die. In this method, first, the shape and the residual stress of the press formed part immediately after springback are obtained by spring-back analysis of the press formed part. Then, the value of the residual stress that is relaxed and reduced at a predetermined ratio as compared with the obtained residual stress is set in the press formed part immediately after the springback, and the shape in which the moments of forces are balanced is obtained, whereby the shape change with the elapse of time after the springback can be predicted.

### Citation List

### Patent Literature

Patent Literature 1: Japanese Patent No. 5795151
Patent Literature 2: Japanese Patent No. 5866892
Patent Literature 3: JP 2013-113144 A
Patent Literature 4: Japanese Patent No. 6888703 Summary

### Technical Problem

The method disclosed in Patent Literature 4 focuses on a stress relaxation phenomenon in which stress gradually decreases with the lapse of time in a case where strain is applied to a metal sheet and is kept constant. The method is based on the premise that, also in the press formed part after springback, the residual stress of a press formed part is relaxed and decreases with the lapse of time.

However, in the method disclosed in Patent Literature 4, it is necessary to adjust the ratio of relaxing and reducing the residual stress immediately after the springback for each press formed part as appropriate in such a manner as to match the shape change of the actual press formed part after the springback. Therefore, it has been desired to accurately predict the shape change of the press formed part after springback without adjusting the ratio of relaxing and reducing the residual stress as appropriate in such a manner as to match the shape change of the actual press formed part.

Furthermore, since the ratio of relaxing and reducing the residual stress immediately after the springback varies for each press formed part, it is difficult to manufacture the press formed part in such a manner as to increase the dimensional accuracy after the shape change with the lapse of time after the springback.

The present invention has been made to solve the above problems, and an object of the present invention is to provide a press formed part shape change predicting method, a device, and a program capable of accurately predicting a shape change with the lapse of time in a press formed part after springback. Furthermore, another object of the present invention is to provide a press formed part manufacturing method capable of manufacturing a press formed part having good dimensional accuracy based on prediction of shape change of the press formed part due to stress relaxation with time after springback.

### Solution to Problem

A press formed part shape change predicting method according to the present invention predicts a shape change of a press formed part due to stress relaxation with a lapse of time after springback at a moment of release from a press forming die, and includes: a forming-bottom-dead-center stress and strain acquiring step of acquiring stress and strain of the press formed part at a forming bottom dead center by performing mechanical calculations of a process of press-forming a metal sheet into the press formed part using the press forming die; an immediately-after-springback residual stress and strain acquiring step of acquiring residual stress and strain of the press formed part immediately after the springback by performing mechanical calculations of a process in which the press formed part released from the press forming die springs back; a post-stress relaxation residual stress setting step of setting residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and a post-stress relaxation shape analysis step of obtaining, by mechanical calculations, a shape in which moments of forces are balanced for the press formed part in which the residual stress after the stress relaxation is set.

In the post-stress relaxation residual stress setting step, one or more of a post-tension retention test, a post-tension and unloading retention test, a post-tension unloading and compression retention test, a post-compression retention test, a post-compression and unloading retention test, or a post-compression, unloading, and tension retention test of the metal sheet may be combined to perform a stress relaxation test that reproduces a stress-strain change history in an entirety or a portion of the press formed part in the process in which the press formed part springs back, a stress change due to stress relaxation of the metal sheet in the stress relaxation test may be measured, and the stress relaxation amount in the entirety or the portion of the press formed part may be acquired based on the measured stress change.

In the post-stress relaxation residual stress setting step, a difference Δσsb = σp **-** σq between a stress σp before the springback and a stress σq immediately after the springback at the forming bottom dead center may be calculated as a stress change amount for the entirety or the portion of the press formed part, and a value obtained by multiplying the calculated stress change amount Δσsb by a predetermined value a may be acquired as the stress relaxation amount for the entirety or the portion of the press formed part.

In the post-stress relaxation residual stress setting step, a stress relaxation test obtained by combining one or more of a post-tension retention test, a post-tension and unloading retention test, a post-compression retention test, a post-compression and unloading retention test, a post-tension unloading and compression retention test, or a post-compression, unloading, and tension retention test of the metal sheet may be performed, a stress change amount Δσ1 in a tensile process or a compression process immediately before the metal sheet may be retained and a stress change amount Δσ2 due to stress relaxation in a retention process of the metal sheet may be measured, and a ratio Δσ2/Δσ1 between Δσ1 and Δσ2 may be set as the predetermined value a.

The metal sheet may be a steel sheet, and in the post-stress relaxation residual stress setting step, the predetermined value a may be set within a range between 0.01 and 0.04.

A press formed part shape change predicting device according to the present invention predicts a shape change of a press formed part due to stress relaxation with a lapse of time after springback at a moment of release from a press forming die, and includes: a forming bottom dead center stress and strain acquiring unit configured to acquire stress and strain of the press formed part at a forming bottom dead center by performing mechanical calculations of a process of press-forming a metal sheet into the press formed part using the press forming die; an immediately-after-springback residual stress and strain acquiring unit configured to acquire residual stress and strain of the press formed part immediately after the springback by performing mechanical calculations of a process in which the press formed part released from the press forming die springs back; a post-stress relaxation residual stress setting unit configured to set residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and a post-stress relaxation shape analyzing unit configured to perform mechanical calculations to obtain a shape in which moments of forces are balanced for the press formed part in which the residual stress after the stress relaxation is set.

A press formed part shape change predicting program according to the present invention predicts a shape change of a press formed part due to stress relaxation with a lapse of time after springback at a moment of release from a press forming die, and causes a computer to function as: a forming bottom dead center stress and strain acquiring unit configured to acquire stress and strain of the press formed part at a forming bottom dead center by performing mechanical calculations of a process of press-forming a metal sheet into the press formed part using the press forming die; an immediately-after-springback residual stress and strain acquiring unit configured to acquire residual stress and strain of the press formed part immediately after the springback by performing mechanical calculations of a process in which the press formed part released from the press forming die springs back; a post-stress relaxation residual stress setting unit configured to set residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and a post-stress relaxation shape analyzing unit configured to obtain, by mechanical calculations, a shape in which moments of forces are balanced for the press formed part in which the residual stress after the stress relaxation is set.

A press formed part manufacturing method according to the present invention manufactures a press formed part such that a shape of the press formed part that changes due to stress relaxation with a lapse of time after springback at a moment of release from a press forming die falls within a predetermined range, and includes: a provisional press forming condition setting step of setting a provisional press forming condition of the press formed part; a post-stress relaxation shape acquiring step of obtaining a shape after stress relaxation after being changed by stress relaxation with a lapse of time for the press formed part after springback at the moment when the press formed part has been released from the press forming die by the press formed part shape change predicting method according to the present invention based on the provisional press forming condition; a shape determination step of determining whether or not the obtained shape of the press formed part after stress relaxation is within the predetermined range set in advance; a provisional press forming condition changing step of changing the provisional press forming condition in a case where it is determined in the shape determination step that the shape of the press formed part after stress relaxation is not within the predetermined range set in advance; a repetition step of repeatedly executing the provisional press forming condition changing step, the post-stress relaxation shape acquiring step, and the shape determination step until it is determined in the shape determination step that the shape of the press formed part after stress relaxation falls within the predetermined range set in advance; a press forming condition determining step of determining, as the press forming condition of the press formed part, the provisional press forming condition in a case where it is determined in the shape determination step that the shape of the press formed part after the stress relaxation is within the predetermined range set in advance; and a press forming step of press-forming the metal sheet into the press formed part under the determined press forming condition.

### Advantageous Effects of Invention

In the present invention, a stress relaxation amount reflecting a stress-strain change history before and after springback is acquired for the entirety or a part of a press formed part immediately after springback. Then, based on the acquired stress relaxation amount, the residual stress after the stress relaxation is set in the press formed part immediately after the springback, and a shape in which forces are balanced is obtained by mechanical calculations. This makes it possible to highly accurately predict the shape change of the press formed part with the lapse of time after the springback at the moment when the press formed part has been released from a press forming die.

Furthermore, in the present invention, the shape of the press forming die to be subjected to press forming is manufactured and adjusted based on the shape change of the press formed part predicted as described above. By manufacturing a press formed part using the press forming die manufactured and adjusted in the above manner, it is made possible to manufacture a press formed part having high dimensional shape accuracy. Furthermore, in the present invention, press forming is performed using an actual press forming die adjusted such that the shape of a press formed part after the shape change due to stress relaxation falls within prescribed dimensions, whereby a press formed part with good dimensional accuracy can be manufactured.

### Brief Description of Drawings

[FIG. 1] FIG. 1 is a flowchart illustrating a flow of processing in a press formed part shape change predicting method according to a first embodiment of the present invention.
[FIG. 2] FIG. 2 is a diagram for describing the shape change after a press formed part obtained by press forming a metal sheet, which is an object of the present invention, is released and sprung back ((a) Process of bend-forming a metal sheet into a plate press-bend-formed part, (b) Process of retaining the plate press-bend-formed part in a press forming die, (c) Process of releasing and unloading the plate press-bend-formed part, and (d) Process of leaving the plate press-bend-formed part that has sprung back) .
[FIG. 3] FIG. 3 is a diagram illustrating an example of (a) Forming bottom dead center, stress distribution in a thickness direction (b) Immediately after springback and (c) After the lapse of time of a press formed part obtained by press forming a metal sheet and (d) Stress-strain change history in a stress relaxation test.
[FIG. 4] FIG. 4 is a graph illustrating an example of (a) Stress-strain change history and (b) Change over time of the change amount of true stress due to stress relaxation in a stress relaxation test using a test piece of a metal sheet.
[FIG. 5] FIG. 5 is a diagram illustrating a stress relaxation test for measuring the stress change amount due to stress relaxation in the press formed part shape change predicting method according to the first embodiment of the invention ((a) Post-tension retention test, (b) Post-tension and unloading retention test, (c) Post-tension unloading and compression retention test).
[FIG. 6] FIG. 6 is a diagram illustrating a stress relaxation test for measuring the stress change amount due to stress relaxation in the press formed part shape change predicting method according to the first embodiment of the invention ((d) Post-compression retention test, (e) Post-compression and unloading retention test, (f) Post-compression, unloading, and tension retention test).
[FIG. 7] FIG. 7 is a graph illustrating a relationship between a stress change amount Δσ1 in a tensile process or a compression process immediately before a metal sheet is retained and a stress change amount Δσ2 due to stress relaxation in a retention process obtained by a stress relaxation test in the press formed part shape change predicting method according to the first embodiment of the invention.
[FIG. 8] FIG. 8 is a flowchart illustrating an aspect of a method of calculating the stress relaxation amount in a press formed part after springback in the press formed part shape change predicting method according to the first embodiment of the invention.
[FIG. 9] FIG. 9 is a block diagram illustrating a configuration of a shape change predicting device for a press formed part according to the first embodiment of the invention.
[FIG. 10] FIG. 10 is a flowchart illustrating a flow of processing in a press formed part manufacturing method according to a second embodiment of the present invention.
[FIG. 11] FIG. 11 is a diagram for describing a method of measuring the deformation amount due to the shape change after springback of a plate press-bend-formed part obtained by bend-forming a metal sheet in Example 1.
[FIG. 12] FIG. 12 is a diagram illustrating a press forming die model and a plate press-bend-formed part model for predicting the shape change due to stress relaxation of a bent portion of the plate press-bend-formed part in Example 1.
[FIG. 13] FIG. 13 is a graph illustrating a forming bottom dead center of a bent portion of a plate press-bend-formed part and a stress distribution in the thickness direction immediately after springback in Example 1.
[FIG. 14] FIG. 14 is a graph illustrating a stress-strain change history at each position in the thickness direction in the bent portion of the plate press-bend-formed part in Example 1.
[FIG. 15] FIG. 15 is a graph illustrating the stress change amount due to stress relaxation at each position in the thickness direction obtained by a stress relaxation test reproducing the stress-strain change history in the bent portion of the plate press-bend-formed part in Example 1.
[FIG. 16] FIG. 16 is a graph illustrating a forming bottom dead center of the bent portion of the plate press-bend-formed part and the stress distribution in the thickness direction immediately after springback and stress relaxation in Example 1.
[FIG. 17] FIG. 17 is a graph illustrating a measurement result of a deformation amount due to stress relaxation of the bent portion of the plate press-bend-formed part in Example 1.
[FIG. 18] FIG. 18 is a graph comparing results of Exemplary Embodiment 2 and Conventional Example 1 to Conventional Example 3 of the deformation amount due to stress relaxation of a bent portion of a plate press-bend-formed part in Example 2.
[FIG. 19] FIG. 19 is a graph illustrating results of Exemplary Embodiment 2 and Conventional Example 1 of the forming bottom dead center of the bent portion of the plate press-bend-formed part and the stress distribution in the thickness direction immediately after springback and stress relaxation in Example 2.
[FIG. 20] FIG. 20 is a diagram illustrating a B-pillar part 71 of an automotive body as a target press formed part and an evaluation target of the shape change after springback in Example 3.
[FIG. 21] FIG. 21 is a diagram illustrating a result of predicting the shape change due to stress relaxation with the lapse of time using a B-pillar model in which the B-pillar part is modeled by a finite-element analysis in Example 3.
[FIG. 22] FIG. 22 is a graph illustrating a measurement result and a prediction result (Exemplary Embodiment 3) of the deformation amount (corresponding to the shape after stress relaxation after the lapse of two days from immediately after springback) due to the shape change after stress relaxation in a specific portion as an evaluation target for the shape change with the lapse of time. Description of Embodiments

### <Background of Present Invention>

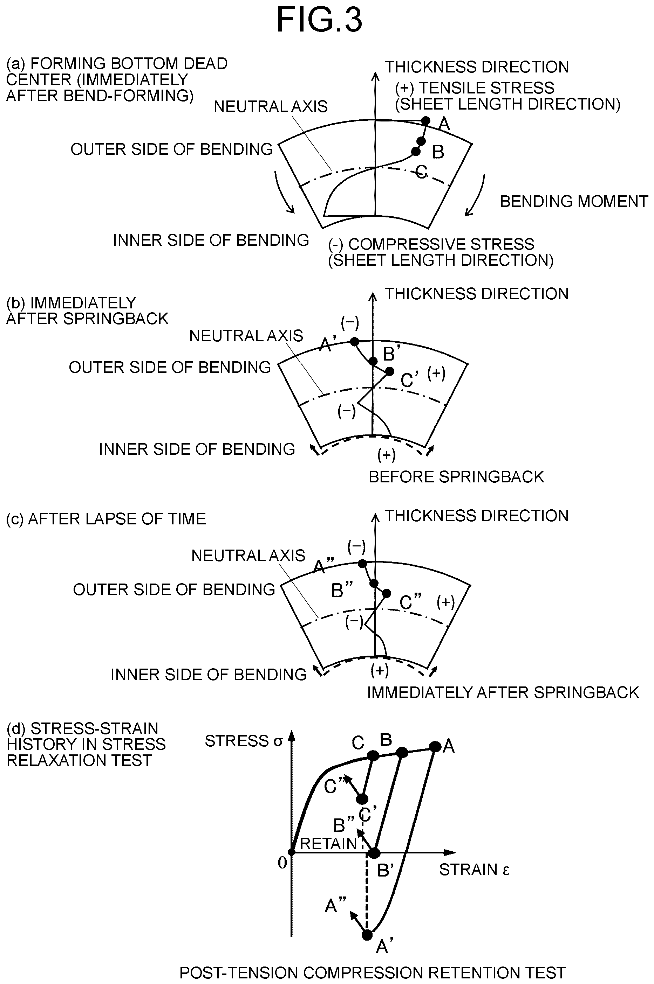

As illustrated in FIG. 2 described above, the inventors conducted various studies on the cause of the shape change with the lapse of time in the plate press-bend-formed part 31 after being released from the press forming die 11 and springback. In the studies, as illustrated in FIG. 3, focus was placed on the stress distribution in the thickness direction in the bent portion 33 of the plate press-bend-formed part 31.

In the bent portion 33, as illustrated in FIG. 3(a), at the forming bottom dead center (immediately after bend forming) where the metal sheet 21 is bent-formed, a tensile stress acts in a region on an outer side of bending with respect to a neutral axis, and a compressive stress acts in a region on an inner side of bending with respect to the neutral axis. However, immediately after the plate press-bend-formed part 31 is released from the press forming die 11 and the bending moment of the bent portion 33 is unloaded and sprung back, as illustrated in FIG. 3(b), a surface layer portion on the outer side of bending and a surface layer portion on the inner side of bending are reversed and subjected to a compressive stress and a tensile stress, respectively. As a result, the tensile stress remains in a region from the surface on the outer side of bending to a position away therefrom by about 1/4 of the sheet thickness in the bent portion 33, and the compressive stress remains in a region from the surface on the inner side of bending to a position away therefrom by about 1/4 of the sheet thickness.

At this point, the surface layer portion (portion indicated by a point A in FIG. 3(a), which is hereinafter referred to as "portion A") on the outer side of bending in the bent portion 33 undergoes tensile deformation up to a plastic region and enters a tensile stress state. Then, compressive deformation occurs after the tensile stress is unloaded at the time of springback (unloading and reversal compression), and a compressive residual stress acts immediately after springback as indicated by a point A' in FIG. 3(b). Furthermore, after the lapse of time from immediately after the springback, as indicated by a point A" in FIG. 3(c), it is retained in a state where the compressive residual stress is acting.

A portion of the bent portion 33 on the inner side of the surface layer portion on the outer side of bending (portion indicated by a point B in FIG. 3(a), which is hereinafter referred to as "portion B") undergoes tensile deformation up to a plastic region in bend forming and enters the tensile stress state. Then, immediately after the springback, the tensile stress is completely unloaded as indicated by a point B' in FIG. 3(b). Furthermore, after the lapse of time from immediately after the springback, the stress is retained in a substantially zero state as indicated by a point B" in FIG. 3(b).

Similarly to the portion B described above, a portion on the further inner side on the outer side of bending of the bent portion 33 (portion indicated by a point C in FIG. 3(a), which is hereinafter referred to as "portion C") undergoes tensile deformation up to a plastic region in bend forming and enters the tensile stress state. However, immediately after the springback, the portion C is in a state in which the tensile stress is unloaded partway as indicated by a point C' in FIG. 3(b). Then, after the lapse of time from immediately after the springback, as indicated by a point C" in FIG. 3(c), it is retained in a state where the tensile residual stress is acting.

As described above, it can be seen that each portion in the thickness direction of the bent portion 33 of the plate press-bend-formed part 31 is retained after undergoing various stress-strain change histories (deformation histories) in the process of being released from the press forming die 11 and subjected to springback.

Therefore, the inventors conducted a test of reproducing a stress-strain change history of each portion in the thickness direction in the bent portion 33 from the forming bottom dead center (FIG. 3(a)) immediately after the bend forming to immediately after the springback (FIG. 3(b)) in a test piece of a metal sheet. In this test, after a uniaxial tensile load or a uniaxial compressed load was applied to the test piece of the metal sheet, the test piece was retained for a certain period of time, and the stress-strain change history with the lapse of time from the start of retention was investigated. Hereinafter, the test is referred to as a "stress relaxation test".

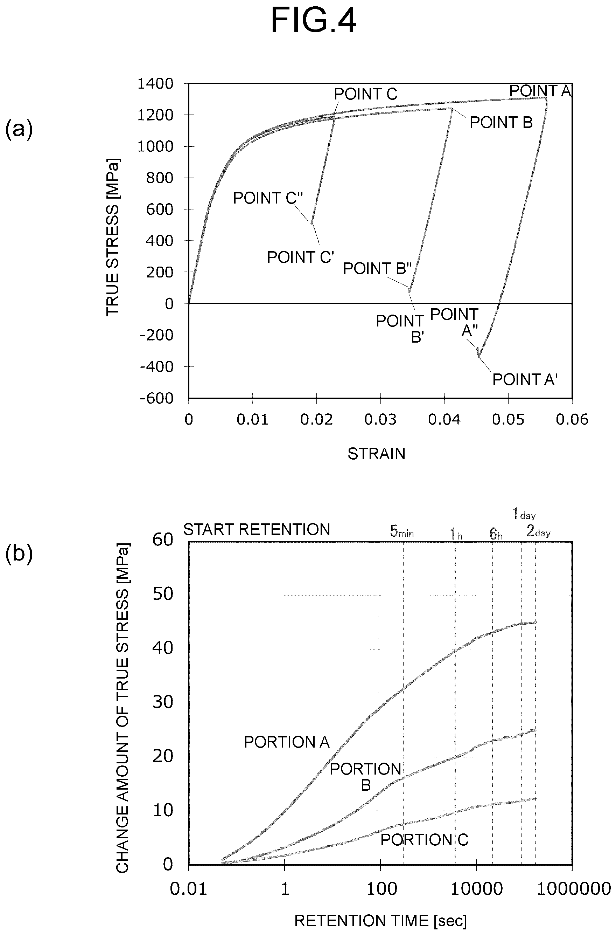

FIG. 4(a) illustrates results of simulating stress-strain change histories of the portion A, the portion B, and the portion C in the thickness direction in the bent portion 33 of the plate press-bend-formed part 31 by a stress relaxation test using a test piece of a steel sheet having a tensile strength of 1180 MPa-grade and a sheet thickness of 1.2 mm.

As a condition for simulating the stress-strain change history in the portion A (see FIG. 3(a)) which is the surface layer portion on the outer side of bending of the bent portion 33, as illustrated in FIG. 4(a), first, tensile deformation was applied to the test piece up to a strain of ε = 0.056 (point A). Then, the test piece was subjected to unloading and reversal compression to be compressively deformed to a compressive stress of σ = -336 MPa (point A'), and the test piece was retained in this state for a certain period of time (two days) (point A").

As a condition for simulating the stress-strain change history in the portion B (see FIG. 3(a)) on the inner side than the surface layer portion on the outer side of bending in the bent portion 33, as illustrated in FIG. 4(a), first, tensile deformation was applied to the test piece up to a strain of ε = 0.042 (point B). Then, the test piece was unloaded to a tensile stress of σ = 69 MPa and halted halfway (point B'), and the test piece was retained for a certain period of time (two days) in this state (point B").

As a condition for simulating the stress-strain change history in the portion C (see FIG. 3(a)) on a further inner side on the outer side of bending in the bent portion 33, as illustrated in FIG. 4(a), first, tensile deformation was applied up to a strain of ε = 0.023 (point C). Then, the test piece was unloaded to a tensile stress of σ = 508 MPa and halted halfway (point C'), and the test piece was retained for a certain period of time (two days) in this state (point C").

FIG. 4(b) illustrates the relationship between the change amount of the true stress from the start of retaining and the retention time in the process of retaining the test piece. As illustrated in FIGS. 4(a) and 4(b), it has been found that in any of the portions A to C of the bent portion 33, a stress change occurs in a direction approaching, with time, a state in which the test piece is tension-deformed (corresponding to immediately after bend forming) from a state immediately after unloading (corresponding to immediately after springback).

That is, the surface layer portion (portion A) on the outer side of bending of the bent portion 33 is in a tensile stress (positive side) state immediately after bend forming (point A in FIG. 4(a)) but enters a compressive residual stress (negative side) state immediately after springback (point A' in FIG. 4(a)). Then, after the springback, a stress change occurs in a direction in which the compressive residual stress is relaxed as the retention time elapses (point A" in FIG. 4(a)).

The portion B and the portion C on the inner side in the thickness direction with respect to the surface layer portion on the outer side of bending are subjected to tensile stress (positive side) immediately after the bend forming (points B and C in FIG. 4(a)), and a tensile residual stress (positive side) remains also immediately after the springback (point B' and point C' in FIG. 4(a)). After the springback, as the retention time elapses, a stress change occurs in a direction approaching the state of the original tensile stress immediately after the bend forming (point B" and point C" in FIG. 4(a)).

Furthermore, as illustrated in FIG. 4(b), the stress change amount in the bent portion 33 of the plate press-bend-formed part 31 after the springback was not uniform in the thickness direction and was larger as it is closer to the surface layer portion on the outer side of bending and smaller as it is closer to the inner side of bending (portion A > portion B > portion C).

As described above, it was found that the shape of the plate press-bend-formed part 31 after springback changes with the residual stress inside the bent portion 33 in the thickness direction gradually and ununiformly changing (stress relaxation). Then, from the results of the stress-strain change histories at the respective portions in the thickness direction of the bent portion 33 illustrated in FIG. 4, it was found that the stress change amount due to stress relaxation with the lapse of time varies.

Furthermore, the inventors conceived that the stress change amount over time based on stress relaxation at each portion in the thickness direction of the bent portion 33 can be obtained by performing a stress relaxation test using a test piece of a metal sheet and simulating a stress-strain change history at each portion of the bent portion 33.

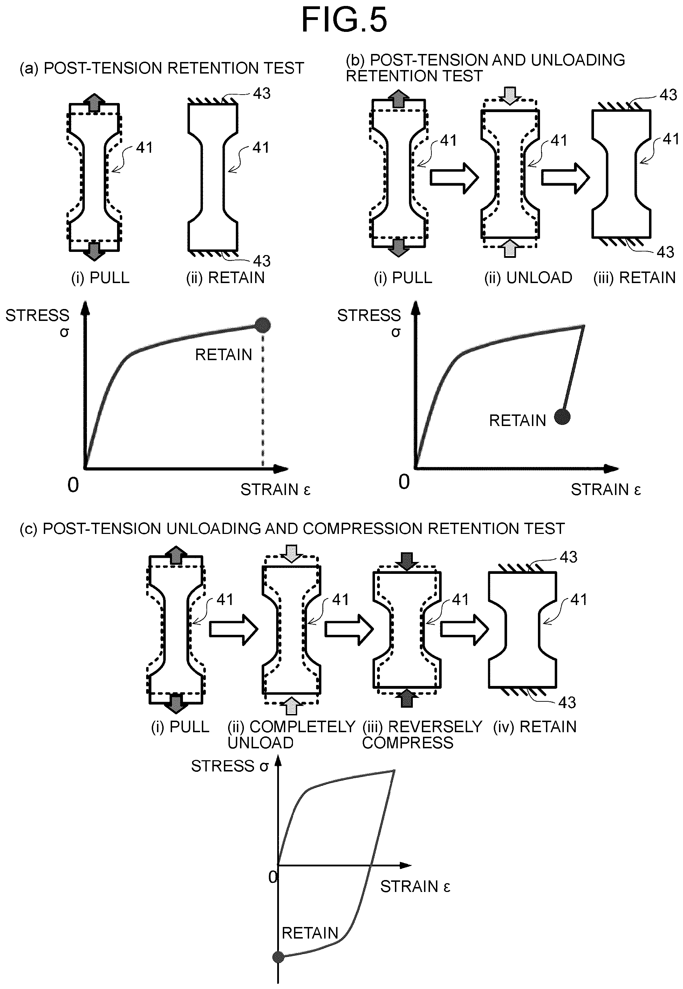

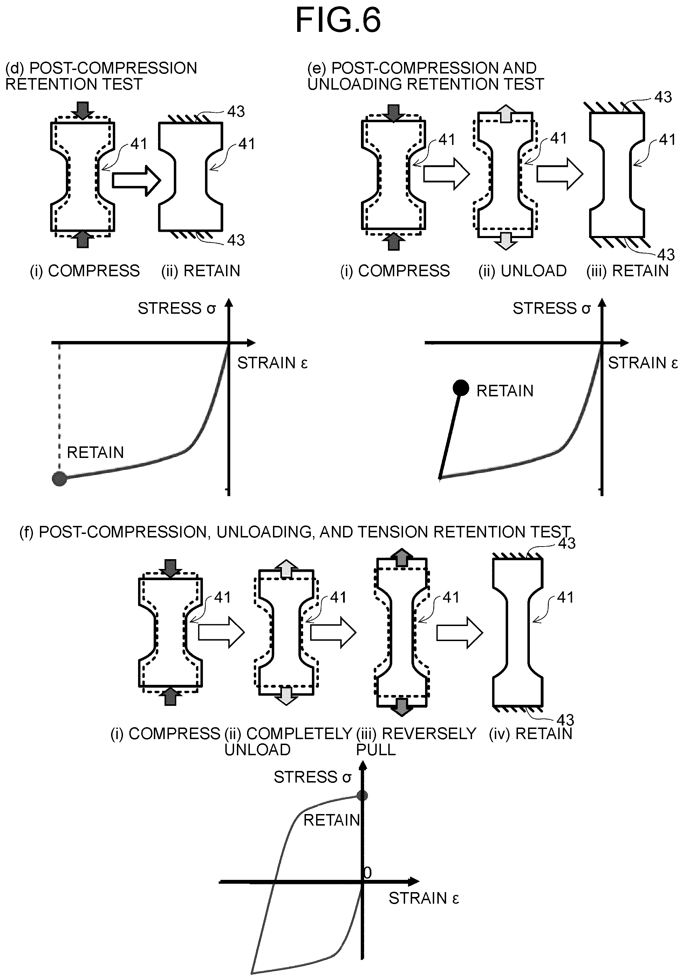

The stress relaxation tests include (a) post-tension retention test, (b) post-tension and unloading retention test, and (c) post-tension unloading and compression retention test illustrated in FIG. 5 and (d) post-compression retention test, (e) post-compression and unloading retention test, and (f) post-compression, unloading, and tension retention test illustrated in FIG. 6.

The post-tension retention test illustrated in FIG. 5(a) is a test in which a uniaxial tensile load is applied to a test piece 41, the test piece 41 is retained in a state where the tensile load is applied, and the stress-strain change history with the lapse of time is measured. In the post-tension retention test, the tester is halted halfway through a uniaxial tensile test in which a uniaxial tensile load is applied to the test piece 41, a retaining portion 43 of the test piece 41 is fixed, and the test piece 41 is retained in a state in which the tensile load is applied.

The post-tension and unloading retention test illustrated in FIG. 5(b) is a test in which a uniaxial tensile load is applied to the test piece 41, then the test piece 41 is retained in a state where the tensile load is partially unloaded, and the stress-strain change history with the lapse of time is measured. In the post-tension and unloading retention test, the tester is turned to unloading halfway of applying the uniaxial tensile load to the test piece 41, and the tester is halted halfway of unloading the tensile stress or when the tensile stress is completely unloaded to fix the retaining portion 43 of the test piece 41. Then, the test piece 41 is retained in a state where the tensile load is applied or in a state where the tensile load is removed to 0.

The post-tension unloading and compression retention test illustrated in FIG. 5(c) is a test in which a uniaxial tensile load is applied to the test piece 41, then the tensile load is removed, and the test piece 41 is retained in a state where the uniaxial compressed load is continuously applied to the test piece, whereby the stress-strain change history with the lapse of time is measured. In the post-tension unloading and compression retention test, first, the tester is turned to unloading halfway of applying the uniaxial tensile load, and the tensile load is completely unloaded. After unloading the tensile load, the uniaxial compressed load is applied to the test piece 41 (reversal compression). hen, the tester is halted halfway of applying the uniaxial compressed load to fix the retaining portion 43 of the test piece 41, and the test piece 41 is retained in a state where the compressed load is applied.

The post-compression retention test illustrated in FIG. 6(d) is a test in which a uniaxial compressed load is applied to the test piece, and the test piece 41 is retained in a state where the compressed load is applied, whereby the stress-strain change history with the lapse of time is measured. In the post-compression retention test, the tester is halted halfway through a uniaxial compressed load test in which a uniaxial compressed load is applied to the test piece 41, the retaining portion 43 of the test piece 41 is fixed, and the test piece 41 is retained in a state in which the compressed load is applied.

The post-compression and unloading retention test illustrated in FIG. 6(e) is a test in which a uniaxial compressed load is applied to the test piece 41, and the test piece 41 is retained in a state where the compressed load is unloaded, whereby the stress-strain change history with the lapse of time is measured. In the post-compression and unloading retention test, the tester is turned to unloading halfway of applying the uniaxial compressed load to the test piece 41, and the tester is halted halfway of unloading the compressive stress or when the compressive stress is completely unloaded to fix the retaining portion 43 of the test piece 41. Then, the test piece 41 is retained in a state where the compressed load is applied or in a state where the compressed load is removed to 0.

The post-compression, unloading, and tension retention test illustrated in FIG. 6(f) is a test in which a uniaxial compressed load is applied to the test piece 41, then the compressed load is removed, and the test piece 41 is retained in a state where the uniaxial tensile load is continuously applied to the test piece, whereby the stress-strain change history with the lapse of time is measured. In the post-compression, unloading, and tension retention test, first, the tester is turned to unloading halfway of applying the uniaxial compressed load, and the compressed load is completely unloaded. After unloading the compressed load, a uniaxial tensile load is applied to the test piece 41 (reversal tension). Then, the tester is halted halfway of applying the uniaxial tensile load to fix the retaining portion 43 of the test piece 41, and the test piece 41 is retained in a state where the tensile load is applied.

In a case where buckling may occur in the test piece 41 when the uniaxial compressed load is applied in each of the above tests, it is preferable to suppress the buckling of the test piece 41 using, for example, a test device including a jig disclosed in JP 2019-035603 A.

The inventors conducted stress relaxation tests illustrated in FIGS. 5 and 6 and examined on the relationship between the stress-strain change history and the stress change amount due to stress relaxation with the lapse of time. From the results of the stress relaxation test illustrated in FIG. 4, it is found that the stress relaxation phenomenon is a phenomenon in which a stress change occurs in a direction directed from a stress state corresponding to that immediately after springback to an original stress state corresponding to that immediately after bend forming before springback. This gave an idea that the stress change amount before and after springback acts as a driving force of the stress relaxation phenomenon after the springback and determines the stress change amount due to the stress relaxation.

Among the stress relaxation tests illustrated in FIGS. 5 and 6, the inventors conducted (b) Post-tension and unloading retention test, (c) Post-tension unloading and compression retention test, and (f) Post-compression, unloading, and tension retention test to investigate the relationship between the stress change amount before and after springback and the stress change amount due to stress relaxation. For the test piece 41, steel sheets having tensile strengths of 1180 MPa-grade and 590 MPa-grade and a sheet thickness of 1.2 mm were used as metal sheets.

The conditions and results of the stress relaxation test are illustrated in Tables 1, 2, and 3. The strain before reversal εa and the stress before reversal σa are strain and stress immediately before turning from tension or compression to unloading in the stress relaxation test, respectively, and correspond to strain and stress of the press formed part before the start of springback, respectively. In addition, the stress after reversal σb is a stress at the time when the tester is halted in the stress relaxation test and the retaining portion 43 of the test piece 41 is fixed and started to be retained, which corresponds to the residual stress of the press formed part immediately after the springback. Furthermore, the stress change amount Δσ1 before and after reversal is a stress change amount in a tensile process or a compression process immediately before retention and is a difference between the stress before reversal σa and the stress after reversal σb. The stress change amount Δσ1 before and after reversal corresponds to the stress change amount of the press formed part before and after the springback. In addition, the stress change amount Δσ2 in the retention process is a stress relaxation amount in the process of retaining for a certain period of time (two days) in the stress relaxation test, which corresponds to the stress change amount in the press formed part after die release and springback.

### [Table 1]

**Table 1**

| Tensile Strength | 1180 MPa-Grade | | |
|---|---|---|---|
| Type of Stress Relaxation Test | (b) | | (c) |
| | Post-Tensile-and-Unloading Retention | | Post-Tensile Unloading and Compression Retention |
| Strain before Reversal εa | 0.023 | 0.042 | 0.056 |
| Stress before Reversal σa [MPa] | 1190 | 1240 | 1309 |
| Stress after Reversal σb [MPa] | 508 | 69 | -336 |
| Stress Change Amount before and after Reversal Δσ1 [MPa] | 682 | 1171 | 1645 |
| Stress Change Amount after Retention Δσ2 [MPa] | 12.5 | 25 | 45 |

### [Table 2]

**Table 2**

| Tensile Strength | 1180 MPa-Grade | | | | |
|---|---|---|---|---|---|
| Type of Stress Relaxation Test | (f) | (b) | | | |
| | Post-Compression, Unloading, and Tensile Retention | Post-Tensile Unloading and Compression Retention | | | |
| Strain before Reversal εa | -0.059 | 0.042 | 0.056 | 0.056 | 0.056 |
| Stress before Reversal σa [MPa] | -1426 | 1240 | 1309 | 1309 | 1309 |
| Stress after Reversal σb [MPa] | 272 | 69 | -336 | -336 | -336 |
| Stress Change Amount before and after Reversal Δσ1 [MPa] | -1698 | 1171 | 1645 | 1645 | 1645 |
| Stress Change Amount after Retention Δσ2 [MPa] | -38 | 25 | 45 | 45 | 45 |

### [Table 3]

**Table 3**

| Tensile Strength | 590 MPa-Grade | | |
|---|---|---|---|
| Type of Stress Relaxation Test | (b) | | (c) |
| | Post-Tensile and Unloading Retention | | Post-Tensile Unloading and Compression Retention |
| Strain before Reversal εa | 0.031 | 0.054 | 0.077 |
| Stress before Reversal σa [MPa] | 557 | 611 | 642 |
| Stress after Reversal σb [MPa] | 194 | 6 | -203 |
| Stress Change Amount before and after Reversal Δσ1 [MPa] | 363 | 605 | 845 |
| Stress Change Amount after Retention Δσ2 [MPa] | 13 | 18 | 28 |

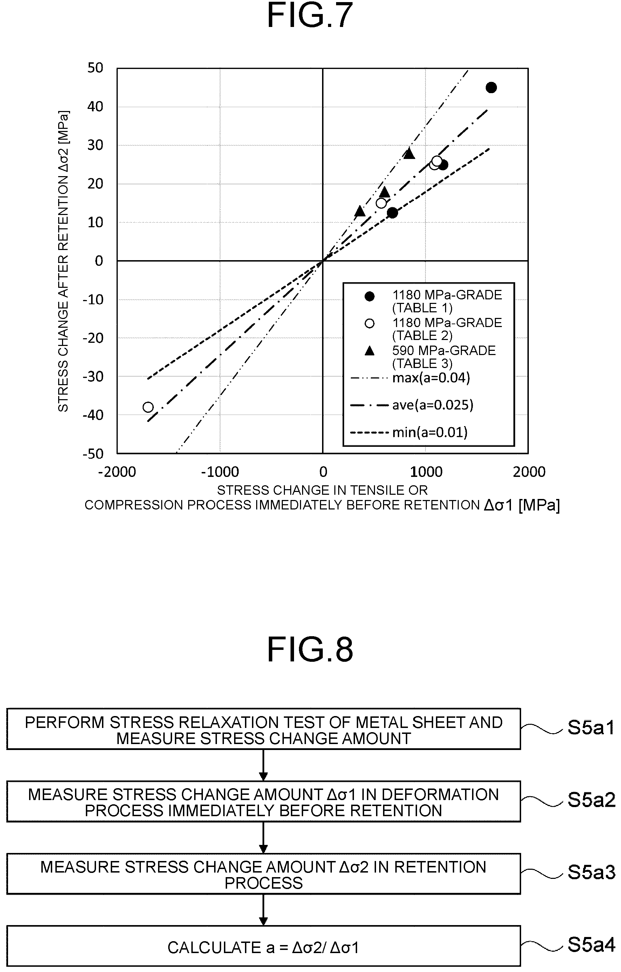

Illustrated in FIG. 7 is a graph illustrating a relationship between the stress change amount Δσ1 in the tensile process or the compression process immediately before the metal sheet is retained and the stress change amount Δσ2 due to stress relaxation in the retention process obtained by a stress relaxation test. From the results illustrated in FIG. 7, it is found that the stress change amount Δσ2 due to stress relaxation after retention is proportional to the stress change amount Δσ1 before and after reversal regardless of a difference in the material strength (tensile strength: 590 MPa-grade and 1180 MPa-grade) of the metal sheet used for the test piece 41.

Therefore, based on the results illustrated in FIG. 7, the inventors obtained the slope of the proportional relationship (a = Δσ2/Δσ1) from the stress change amount Δσ1 before and after reversal and the stress change amount Δσ2 due to stress relaxation in the retention process. As a result, as illustrated in FIG. 7, the value of a obtained by linearly approximating plots of the stress change amounts Δσ1 and Δσ2 obtained by the stress relaxation test was calculated to be 0.025. Furthermore, from the results illustrated in FIG. 7, it is found that the possible range of a is between 0.01 and 0.04.

From the above results, the inventors have found that the stress change amount due to stress relaxation with the lapse of time after springback can be calculated by multiplying the stress change amount before and after springback by a predetermined value (= a). Furthermore, the inventors conceived of predicting the shape change of a press formed part with the lapse of time after springback by adding the stress relaxation amount calculated in this manner to the residual stress immediately after the springback.

The present invention has been made based on the above examination results, and hereinafter, a press formed part shape change predicting method, a device, and a program according to a first embodiment of the invention, and a press formed part manufacturing method according to a second embodiment of the present invention will be described.

### [First Embodiment]

### <Press Formed Part Shape Change Predicting Method>

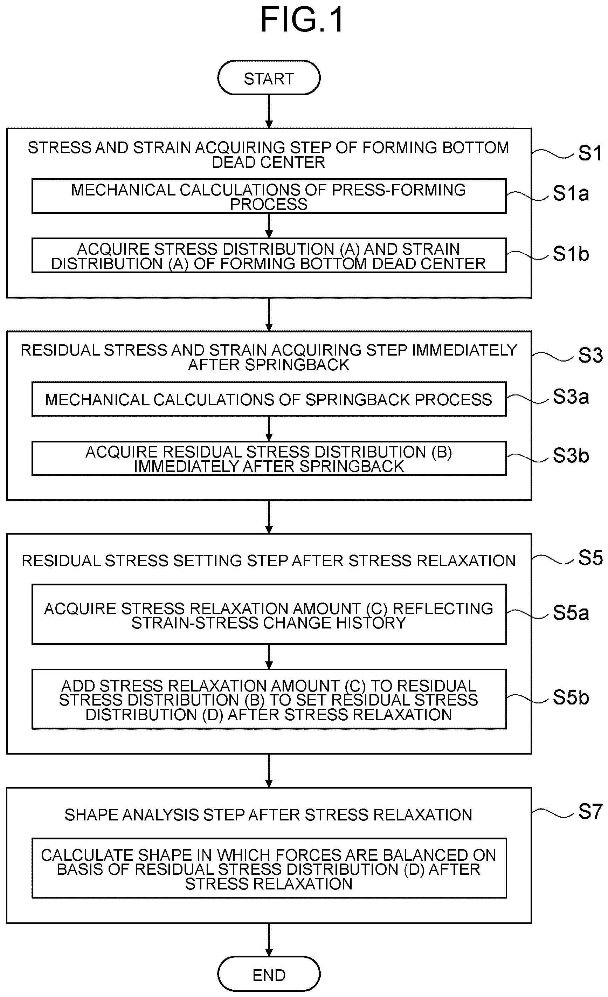

A press formed part shape change predicting method according to a first embodiment of the invention is for predicting the shape change of a press formed part due to stress relaxation with time after springback at the moment when the press formed part has been released from a press forming die. As illustrated in FIG. 1, the press formed part shape change predicting method according to the first embodiment includes a stress and strain acquiring step S1 of a forming bottom dead center and a residual stress and strain acquiring step S3 immediately after springback. As illustrated in FIG. 1, the press formed part shape change predicting method according to the first embodiment further includes a residual stress setting step S5 after stress relaxation and a shape analysis step S7 after stress relaxation. Each of the above steps will be described below.

### <<Stress and Strain Acquiring Step of Forming Bottom Dead Center>>

The stress and strain acquiring step S1 of the forming bottom dead center includes a step (S1a) of performing mechanical calculations of a process of press-forming a metal sheet into a press formed part using a press forming die. Furthermore, the stress and strain acquiring step S1 of the forming bottom dead center includes a step (S1b) of acquiring stress and strain of the press formed part at the forming bottom dead center by mechanical calculations of the process of press forming.

A press forming analysis by the finite element method can be used for mechanical calculations in the process of press forming the metal sheet. Performed in the press forming analysis is mechanical calculations of the process of press forming the metal sheet to the forming bottom dead center using a press forming die model obtained by modeling a press forming die. As a result, the stress distribution and the strain distribution of the press formed part at the forming bottom dead center can be acquired. Furthermore, the shape of the press formed part at the forming bottom dead center can be acquired by the press forming analysis. Hereinafter, the stress distribution of the press formed part at the forming bottom dead center is referred to as "stress distribution (A)", and the strain distribution of the press formed part at the forming bottom dead center is referred to as "strain distribution (A)".

### <<Residual Stress and Strain Acquiring Step Immediately after Springback>>

The residual stress and strain acquiring step S3 immediately after the springback includes a step (S3a) of performing mechanical calculations of the process of releasing the press formed part from the press forming die and allowing the press formed part to springback. Furthermore, the residual stress and strain acquiring step S3 immediately after springback includes a step (S3b) of acquiring the residual stress and strain of the press formed part immediately after the springback by the mechanical calculations of the process of springback.

A spring-back analysis by the finite element method can be used for mechanical calculations of the process in which the press formed part springs back. In the spring-back analysis, a shape in which moments of forces are balanced immediately after the press formed part is released from the press forming die model is obtained by mechanical calculations, the press formed part press-formed to the forming bottom dead center in the stress and strain acquiring step S1 of the forming bottom dead center. As a result, the residual stress distribution and the strain distribution of the press formed part immediately after springback can be acquired. Furthermore, the shape of the press formed part immediately after the springback can be obtained by the spring-back analysis. Hereinafter, the residual stress distribution of the press formed part immediately after the springback is referred to as "residual stress distribution (B)", and the strain distribution of the press formed part immediately after springback is referred to as "strain distribution (B)".

### <<Residual Stress Setting Step after Stress Relaxation>>

The residual stress setting step S5 after stress relaxation includes a step (S5a) of acquiring the stress relaxation amount reflecting a stress-strain change history before and after springback to the entirety or a part of the press formed part immediately after the springback. Furthermore, the residual stress setting step S5 after stress relaxation includes a step (S5b) of adding the acquired stress relaxation amount to the value of the residual stress of all or some portions of the press formed part immediately after springback to set the residual stress after stress relaxation. Hereinafter, the stress relaxation amount reflecting the stress-strain change history before and after springback is referred to as a "stress relaxation amount (C)". Furthermore, the residual stress distribution after stress relaxation, which is set by adding the stress relaxation amount (C) to the value of the residual stress in all or some portions of the press formed part immediately after springback, is referred to as "residual stress distribution (D)".

### (Calculation Method of Stress Relaxation Amount)

One aspect of a specific procedure for acquiring the stress relaxation amount in the residual stress setting step S5 after stress relaxation will be described below.

First, a stress relaxation test is performed in which a stress-strain change history of each portion of the press formed part in the process of changing from the stress distribution (A) and the strain distribution (A) at the forming bottom dead center to the residual stress distribution (B) and the strain distribution (B) immediately after springback is reproduced on a test piece of a metal sheet. The stress relaxation test is a combination of one or more of the stress relaxation tests illustrated in FIGS. 5(a) to 5(c) and FIGS. 6(d) to 6(f) described above. Then, the stress change amount is measured by the stress relaxation test, and the measured stress change amount is acquired as the stress relaxation amount (C) in each portion of the press formed part.

The stress relaxation test does not need to be performed in such a manner as to reproduce the stress-strain change history of all portions (such as a mesh of finite elements) of the press formed part. In this case, first, a portion that has a characteristic stress-strain change history before and after springback is specified (for example, the portion A, the portion B, and the portion C corresponding to the points A, B, and C, respectively, in the bent portion 33 illustrated in FIG. 3 described above). Then, the stress relaxation amount at each specified portion is directly measured by the stress relaxation test. Furthermore, the stress relaxation amount at a portion other than the specified portions may be obtained by interpolation or extrapolation of the stress relaxation amount obtained for each portion by the stress relaxation test using the proportional relationship between the stress change amount Δσ1 before and after reversal and the stress change amount Δσ2 due to stress relaxation in the retention process as illustrated in FIG. 7.

### <<Shape Analysis Step after Stress Relaxation>>

The shape analysis step S7 after stress relaxation is a step of obtaining the shape in which forces are balanced for the press formed part in which the residual stress after stress relaxation is set in the residual stress setting step S5 after stress relaxation by mechanical calculations.

In the first embodiment, for the press formed part in which the residual stress distribution (D) after stress relaxation is set, the shape in which forces are balanced is obtained by mechanical calculations.

As described above, in the press formed part shape change predicting method according to the first embodiment, the stress relaxation amount reflecting the stress-strain change history before and after springback is acquired for the entirety or a portion of the press formed part immediately after springback. Then, based on the acquired stress relaxation amount, the residual stress after the stress relaxation is set in the press formed part immediately after the springback, and a shape in which forces are balanced is obtained by mechanical calculations. As a result, it is possible to accurately predict the shape change of the press formed part with the lapse of time after springback without adjusting the ratio of relaxing and reducing the residual stress immediately after springback as appropriate in such a manner as to match the shape change of the actual press formed part after the springback.

In the above description, the residual stress setting step S5 after stress relaxation is for acquiring the stress relaxation amount in all or some portions of the press formed part by the stress relaxation test. However, in the present invention, in the residual stress setting step S5 after stress relaxation, calculation may be performed by multiplying the stress change amount before and after springback in each portion of the press formed part by a predetermined value a without performing the stress relaxation test for reproducing the stress-strain history of each portion in the press formed part.

In this case, a stress change amount Δσsb before and after springback is only required to be calculated from a stress σp before springback and a stress σq immediately after the springback at the forming bottom dead center in each portion of the press formed part (Δσsb = σp - σq). Furthermore, the stress relaxation amount can be acquired by multiplying the stress change amount Δσsb by the predetermined value a.

The predetermined value a to multiply the stress change amount Δσsb can be determined by, for example, each procedure of S5a1 to S5a4 illustrated in FIG. 8. First, on the test piece 41 of the metal sheet which is a material to be processed of a press formed part, a stress relaxation test obtained by combining one or more of the stress relaxation tests illustrated in FIGS. 5(a) to 5(c) and FIGS. 6(d) to 6(f) is performed in advance (S5a1). Next, the stress change amount Δσ1 in the tensile process or the compression process in a process immediately before retaining the test piece 41 in the stress relaxation test is measured (S5a2). Subsequently, the stress change amount Δσ2 due to stress relaxation in the process of retaining the test piece 41 is measured (S5a3). Then, the measured stress change amounts Δσ1 and Δσ2 are plotted, a ratio Δσ2/Δσ1 between Δσ1 and σ is calculated as illustrated in FIG. 7, and the calculated Δσ2/Δσ1 is defined as a slope a (S5a4).

In a case where the metal sheet to be subjected to press forming is a steel sheet, the predetermined value a may be set within a range between 0.01 and 0.04 from the results illustrated in FIG. 7 without performing a stress relaxation test using the metal sheet as the test piece 41.

### <Shape Change Predicting Device for Press Formed Part>

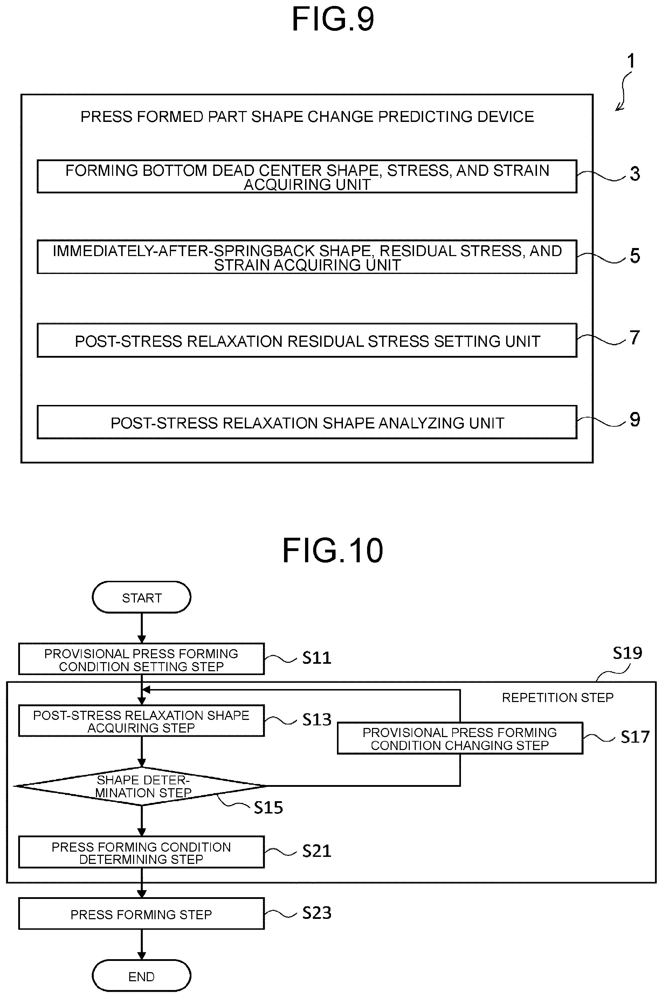

The press formed part shape change predicting device (hereinafter referred to as "shape change predicting device") according to the first embodiment of the invention is for predicting the shape change of a press formed part due to stress relaxation with time after springback at the moment when the press formed part has been released from a press forming die. As illustrated in FIG. 9, the shape change predicting device 1 includes a forming bottom dead center stress and strain acquiring unit 3, an immediately-after-springback residual stress and strain acquiring unit 5, a post-stress relaxation residual stress setting unit 7, and a post-stress relaxation shape analyzing unit 9. The shape change predicting device 1 may include a central processing unit (CPU) of a computer (personal computer (PC) or the like). In this case, each of these units functions with the CPU of the computer executing a predetermined program.

### <<Forming Bottom Dead Center Stress and Strain Acquiring Unit>>

The forming bottom dead center stress and strain acquiring unit 3 performs mechanical calculations of the process of press forming a metal sheet into a press formed part using a press forming die to acquire the stress and the strain of the press formed part at the forming bottom dead center.

In the first embodiment, the forming bottom dead center stress and strain acquiring unit 3 executes the above-described stress and strain acquiring step S1 at the forming bottom dead center of the press formed part shape change predicting method according to the first embodiment.

### <<Immediately-after-springback Residual Stress and Strain Acquiring Unit>>

The immediately-after-springback residual stress and strain acquiring unit 5 performs mechanical calculations of the process of releasing the press formed part from the press forming die and allowing the press formed part to springback. Furthermore, the immediately-after-springback residual stress and strain acquiring unit 5 acquires the residual stress and strain of the press formed part immediately after the springback by the mechanical calculations of the process of springback.

In the first embodiment, the immediately-after-springback residual stress and strain acquiring unit 5 executes the residual stress and strain acquiring step S3 immediately after springback of the press formed part shape change predicting method according to the first embodiment described above.

### <<Post-Stress Relaxation Residual Stress Setting Unit>>

The post-stress relaxation residual stress setting unit 7 acquires the stress relaxation amount reflecting a stress-strain change history before and after springback to the entirety or a part of the press formed part immediately after the springback. Furthermore, the post-stress relaxation residual stress setting unit 7 adds the acquired stress relaxation amount to the value of the residual stress of all or some portions of the press formed part immediately after springback to set the residual stress after stress relaxation.

In the first embodiment, the post-stress relaxation residual stress setting unit 7 executes the residual stress setting step S5 after stress relaxation of the press formed part shape change predicting method according to the first embodiment described above.

As for the portions of the press formed part, the post-stress relaxation residual stress setting unit 7 may acquire the stress relaxation amount for all portions of the press formed part or may acquire the stress relaxation amount for some portions of the press formed part. In the case of acquiring the stress relaxation amount for some portions of the press formed part, it is only required that a portion having a characteristic stress-strain change history before and after springback be specified and that the stress relaxation amount at the specified portion be acquired. Furthermore, it is only required that the stress relaxation amount other than that of the specified portion be acquired by interpolating or extrapolating the stress relaxation amount obtained for the specified portion based on the stress change before and after the springback.

In the case of acquiring the stress relaxation amount, the post-stress relaxation residual stress setting unit 7 may directly acquire the measurement result of the stress relaxation test that reproduces the stress-strain change history of each portion in the press formed part. Alternatively, the post-stress relaxation residual stress setting unit 7 may acquire, as the stress relaxation amount, a value calculated by multiplying the stress change amount before and after springback in each portion of the press formed part by the predetermined value a. Furthermore, in a case where the metal sheet to be subjected to press forming is a steel sheet, the predetermined value a may be a value set within a range between 0.01 and 0.04 as illustrated in FIG. 7 described above.

### <<Post-Stress Relaxation Shape Analyzing Unit>>

The post-stress relaxation shape analyzing unit 9 performs mechanical calculations to obtain a shape in which the moments of forces are balanced for the press formed part in which the residual stress after stress relaxation is set by the post-stress relaxation residual stress setting unit 7.

In the first embodiment, the post-stress relaxation shape analyzing unit 9 executes the shape analysis step S7 after stress relaxation of the press formed part shape change predicting method according to the first embodiment described above.

### <Shape Change Predicting Program for Press Formed Part>

The first embodiment of the present invention can be configured as a shape change predicting program for a press formed part. That is, the shape change predicting program for a press formed part according to the first embodiment of the invention is for predicting a shape change of a press formed part with time after springback at the moment when the press formed part has been released from a press forming die. As illustrated in FIG. 9, the shape change predicting program according to the first embodiment has a function of causing a computer to operate as the forming bottom dead center stress and strain acquiring unit 3 and the immediately-after-springback residual stress and strain acquiring unit 5. Furthermore, as illustrated in FIG. 9, the shape change predicting program according to the first embodiment causes the computer to function as the post-stress relaxation residual stress setting unit 7 and the post-stress relaxation shape analyzing unit 9.

As described above, in the press formed part shape change predicting device and the program according to the first embodiment, the stress relaxation amount reflecting the stress-strain change history before and after springback is acquired for the entirety or a portion of the press formed part immediately after springback. Then, based on the acquired stress relaxation amount, the residual stress after the stress relaxation is set in the press formed part immediately after the springback, and a shape in which forces are balanced is obtained by mechanical calculations. As a result, it is possible to accurately predict the shape change of the press formed part with the lapse of time after springback without adjusting the ratio of relaxing and reducing the residual stress immediately after springback as appropriate in such a manner as to match the shape change of the actual press formed part after the springback.

### [Second Embodiment]

### <Press Formed Part Manufacturing Method>

A press formed part manufacturing method according to a second embodiment of the present invention is for manufacturing a press formed part such that the shape of the press formed part that changes due to stress relaxation with time after springback at the moment of release from a press forming die falls within a predetermined range. As illustrated in FIG. 10, the press formed part manufacturing method according to the second embodiment includes a provisional press forming condition setting step S11, a post-stress relaxation shape acquiring step S13, and a shape determination step S15. As illustrated in FIG. 10, the press formed part manufacturing method according to the second embodiment further includes a provisional press forming condition changing step S17, a repetition step S19, a press forming condition determining step S21, and a press forming step S23. Each of the above steps will be described below.

### <<Provisional Press Forming Condition Setting Step>>

The provisional press forming condition setting step S11 is a step of setting provisional press forming conditions for the press formed part.

Examples of the provisional press forming conditions set in the provisional press forming condition setting step S11 include the bending radius R (radius of the die shoulder part) and a bending angle of the bent portion 33 in the case of targeting the plate press-bend-formed part 31 having the bent portion 33 as illustrated in FIG. 2 described above.

Examples of other provisional press forming conditions include a clearance between a punch and a die of the press forming die used for press forming of the press formed part. Meanwhile, in a case where the press formed part is press-formed by a draw-bending method (stretch bending or bending and stretching), examples thereof also include the radius of the die shoulder part, a clearance between side wall portions (side wall forming portions) of the die and the punch, and a blank holder pressure by the die and a blank holder.

### <<Post-Stress Relaxation Shape Acquiring Step>>

The post-stress relaxation shape acquiring step S13 is a step of obtaining the post-stress relaxation shape having been changed by the stress relaxation with the lapse of time for the press formed part after springback at the moment of release from the press forming die. In post-stress relaxation shape acquiring step S13, the shape of the press formed part after stress relaxation is obtained by the above-described press formed part shape change predicting method according to the first embodiment based on the provisional press forming conditions set in the provisional press forming condition setting step S11.

### <<Shape Determination Step>>

The shape determination step S15 is a step of determining whether the shape of the press formed part after stress relaxation acquired in the post-stress relaxation shape acquiring step S13 falls within a predetermined range set in advance.

The predetermined range regarding the shape of the press formed part may be set as appropriate based on, for example, a dimensional error allowed in an actual part.

### <<Provisional Press Forming Condition Changing Step>>

The provisional press forming condition changing step S17 is a step of changing the provisional press forming condition in a case where it is determined in the shape determination step S15 that the shape of the press formed part after stress relaxation is not within the preset predetermined range.

As described above, in the shape change of the press formed part after springback, the stress change amount before and after springback is the driving force of the stress relaxation phenomenon, which gives the stress change amount due to stress relaxation. Therefore, in order to reduce the shape change due to stress relaxation, the provisional press forming conditions are changed such that the degree of springback occurring at the moment of releasing from the press forming die is reduced. Examples of the provisional press forming conditions to be changed in the provisional press forming condition setting step S17 include a condition related to the shape of the press forming die and a condition related to setting of the press forming machine.

For example, in the case of bend-forming the metal sheet (see FIG. 2) or in the case of a press formed part by the draw-bending method (stretch bending or bending and stretching), the bent portion can be pulled by reducing the radius of the die shoulder part (condition related to the shape of the press forming die) or the clearance between the side wall portions of the die and the punch (condition related to the setting of the press forming machine), whereby the strain of the bent portion can be offset. By changing the provisional press forming conditions in this manner, it can be expected to reduce the degree of the springback. In addition, the provisional press forming conditions may be changed by changing the shape of the press forming die such as correcting the bending angle of the bent portion in consideration of the shape change due to stress relaxation. In addition, the setting of a control panel of the press forming machine may be changed.

### <<Repetition Step>>

The repetition step S19 is a step of repeatedly executing the post-stress relaxation shape acquiring step S13 and the shape determination step S15 under the provisional press forming conditions changed in the provisional press forming condition changing step S17. This repetition is performed until it is determined in the shape determination step S15 that the shape of the press formed part after stress relaxation is within the predetermined range. Therefore, in a case where it is not determined that the shape of the press formed part after stress relaxation falls within the predetermined range only by changing the provisional press forming condition once, the provisional press forming condition changing step S17 is also repeated.

### <<Press Forming Condition Determining Step>>

In a case where the shape of the press formed part after stress relaxation is within the predetermined range set in advance, the press forming condition determining step S21 is a step of determining the provisional press forming condition in that case as the press forming condition of the press formed part. For example, in a case where the shape of the press forming die is changed as the provisional press forming condition, shape data of a press forming die model used for a press forming analysis is input to a CAD/CAM program linked with a numerically-controlled machine and is converted into NC data (numerical control data) (numerical control (NC) program) for NC machining. The numerically-controlled machine machines a casting mold model made of expanded polystyrene or a press forming die made of steel by a full mold casting method. Using the NC data (NC program), a casting mold model made of expanded polystyrene or a press forming die made of steel is manufactured by the numerically-controlled machine. As a result, the shape of the press forming die used for the actual press forming can be determined as the press forming condition of the press formed part. Moreover, in a case where the clearance between the die and the punch of the press forming die is changed as the provisional press forming condition, it is preferable to determine the height of a distance block in accordance with the clearance. Furthermore, in a case where the setting of the control panel of the press forming machine is changed as the provisional press forming condition, the setting of the control panel of the press forming machine after the change is determined as the press forming condition of the press formed part.

### <<Press Forming Step>>

The press forming step S23 is a step of press-forming the metal sheet into a press formed part under the press forming conditions determined in the press forming condition determining step S21.

As described above, in the press formed part manufacturing method according to the second embodiment, the shape of the press forming die to be subjected to press forming is produced and adjusted based on the shape change of the press formed part predicted by the press formed part shape change predicting method according to the first embodiment. By manufacturing a press formed part using the press forming die manufactured and adjusted in the above manner, it is made possible to manufacture a press formed part having high dimensional shape accuracy. Furthermore, in the press formed part manufacturing method according to the second embodiment, press forming is performed using an actual press forming die adjusted such that the shape of a press formed part after the shape change due to stress relaxation falls within prescribed dimensions, whereby a press formed part with good dimensional accuracy can be manufactured.

### [Example 1]

Tests to confirm the effect of the present invention were performed, which will be described below. In Example 1, as illustrated in FIG. 2, targeting the L bending test of the metal sheet 21 using the press forming die 11 including the punch 13 and the die 15, the shape change of the plate press-bend-formed part 31 due to stress relaxation after release from the press forming die 11 and springback was predicted. Furthermore, the shape change after springback of the plate press-bend-formed part 31 press-formed by an actual L bending test was measured and examined by comparison with the prediction result.

In the L bending test in Example 1, as the metal sheet 21, a super high tension steel sheet (ultra-high-tensile steel sheet) having a rectangular shape with a width of 90 mm, a length of 120 mm, and a sheet thickness of 1.2 mm, mechanical properties shown in Table 4, and a tensile strength of 1180 MPa-grade with a large shape change after springback was used.

### [Table 4]

**Table 4**

| | Sheet Thickness/mm | Yield Strength/MPa | Tensile Strength/MPa | Elongation/% |
|---|---|---|---|---|
| Metal Sheet | 1.2 | 921 | 1211 | 12 |

In the L bending test, first, as illustrated in FIG. 2, (a) the metal sheet 21 was placed on the die 15 having a shoulder part 15a having a predetermined radius of the die shoulder part (8 mm), and (b) the punch 13 was pushed down toward the die 15. As a result, the metal sheet 21 was bent at 90° along the shoulder part 15a of the die, and the plate press-bend-formed part 31 having the bent portion 33 and a side wall portion 35 was bend-formed. In the L bending test, the clearance between the punch 13 and the die 15 at the forming bottom dead center was 25% of the sheet thickness of the metal sheet 21 (0.3 mm).

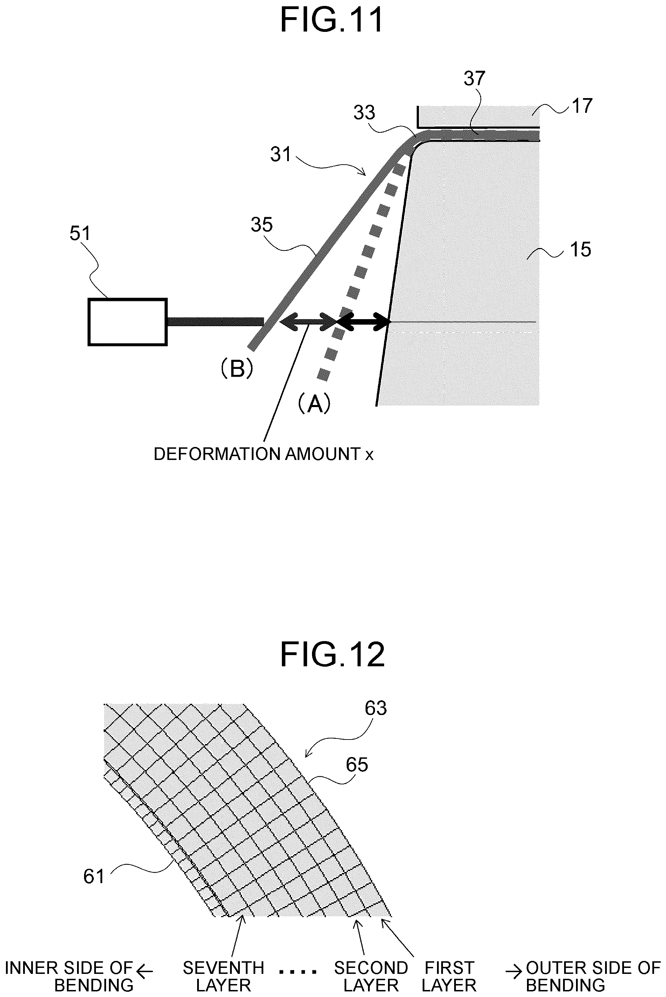

Next, (c) after the bend-forming, the punch 13 was raised for unloading (die release). As a result, springback occurred in the bent portion 33 of the plate press-bend-formed part 31. Then, (d) after the springback, the plate press-bend-formed part 31 was left for two days in a state where a top portion 37 of the plate press-bend-formed part 31 was pressed with a pressure pad 17 (see FIG. 11).

In the process of leaving the plate press-bend-formed part 31, the change with time of the shape change due to the stress relaxation immediately after the springback of the plate press-bend-formed part 31 was measured. As illustrated in FIG. 11, as the shape change of the plate press-bend-formed part 31, the side wall portion 35 of the plate press-bend-formed part 31 was irradiated with a laser using a laser displacement meter 51, and the deformation amount of the side wall portion 35 was measured. In FIG. 11, (A) schematically illustrates the shape of the plate press-bend-formed part 31 immediately after the springback, and (B) schematically illustrates the shape of the plate press-bend-formed part 31 after the time elapses after the springback.

Subsequently, an analysis for predicting the shape change of the plate press-bend-formed part 31 was performed by the press formed part shape change predicting method according to the present invention (Exemplary Embodiment 1). In the analysis, as illustrated in FIG. 12, a press forming die model 61 and a plate press-bend-formed part model 63 were used. The press forming die model 61 was obtained by modeling of the press forming die 11 (the punch 13 and the die 15) used in the L bending test illustrated in FIG. **2****.** Meanwhile, the plate press-bend-formed part model 63 was obtained by modeling by a twodimensional solid element with plane strain having seven layers evenly divided in the thickness direction, and an isotropic hardening model was applied as a hardening model.

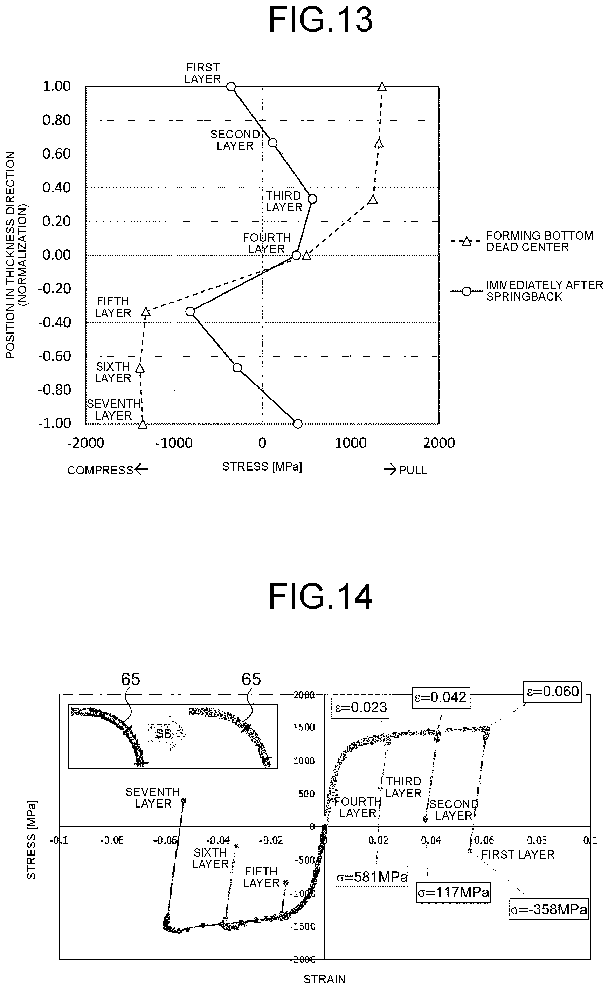

In the analysis, first, a press forming analysis was performed in which the metal sheet was bend-formed to the forming bottom dead center. Then, the shape, the stress, and the strain of the plate press-bend-formed part model 63 at the forming bottom dead center were obtained by the press forming analysis. FIG. 13 illustrates the stress at each portion in the thickness direction of a bent portion 65 in the plate press-bend-formed part model 63 at the forming bottom dead center (△ shape in FIG. 13). In FIG. 13, the vertical axis is obtained through normalization of the positions of layers in the thickness direction such that the center of the sheet thickness is set to 0, the surface on the outer side of bending is set to +1, and the surface on the inner side of bending is set to -1.

Next, spring-back analysis was performed to obtain the shape, the residual stress, and the strain of the plate press-bend-formed part model 63 immediately after the plate press-bend-formed part model 63 at the forming bottom dead center was released from the press forming die model 61. FIG. 13 illustrates the stress at each portion in the thickness direction of the bent portion 65 in the plate press-bend-formed part model 63 immediately after springback (∘ shape in FIG. 13).

Furthermore, a stress relaxation test for reproducing a stress-strain change history before and after springback was performed for each portion in the thickness direction of first to seventh layers in the bent portion 65 of the plate press-bend-formed part model 63, and the stress change due to stress relaxation was measured.

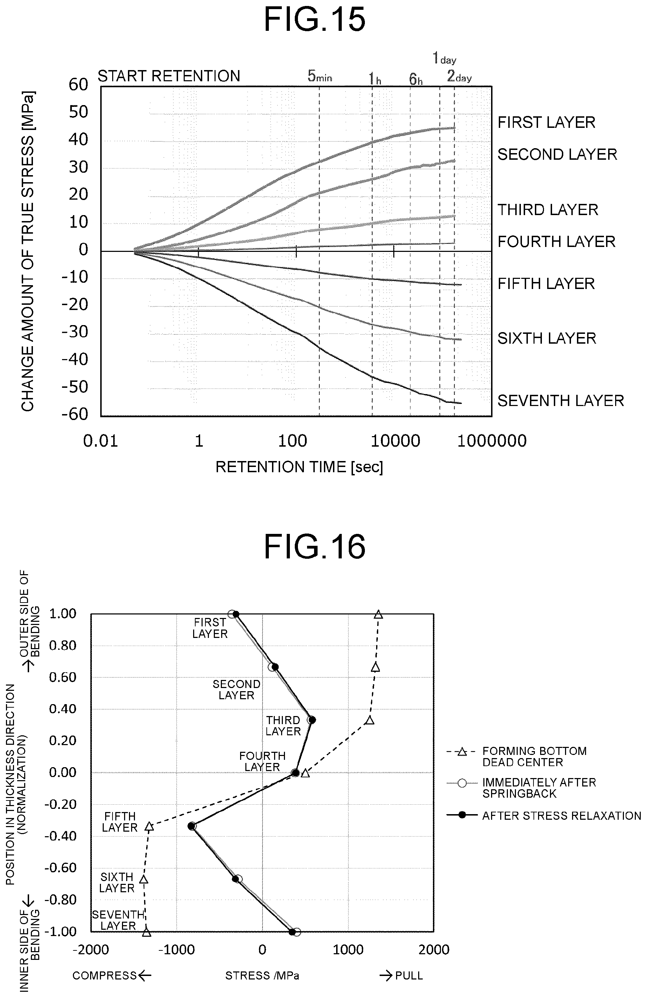

FIG. 14 illustrates the measurement results of the stress-strain change history measured by the stress relaxation test for each of portions in the thickness direction of the first to seventh layers in the bent portion 65 of the plate press-bend-formed part model 63. In addition, as an example of the stress change due to stress relaxation, FIG. 15 illustrates a measurement result of the change with time of the true stress in the first to seventh layers of the bent portion 65 of the plate press-bend-formed part model 63. Then, based on the results illustrated in FIGS. 14 and 15, the stress relaxation amount in each of the portions (first to seventh layers) of the bent portion 65 of the plate press-bend-formed part model 63 was obtained.

Next, the stress relaxation amount obtained for each of the portions (first to seventh layers) of the bent portion 65 of the plate press-bend-formed part model 63 was added to the value of the residual stress immediately after the springback to set the residual stress after the stress relaxation.

Table 5 shows the stress (at the forming bottom dead center and immediately after springback) at each of the portions in the thickness direction in the bent portion 65 of the plate press-bend-formed part model 63. Furthermore, Table 5 shows the stress relaxation amount obtained by the stress relaxation test and the residual stress after stress relaxation set by adding the stress relaxation amount to the residual stress immediately after springback. In addition, FIG. 16 illustrates a stress distribution obtained by adding the stress relaxation amount obtained by the stress relaxation test to the residual stress in each of the portions in the thickness direction of the bent portion 65 in the plate press-bend-formed part model 63 immediately after springback illustrated in FIG. 13 (• shape in FIG. 16). In FIG. 16, the vertical axis is obtained by normalizing the positions of the respective layers in the thickness direction, similarly to the vertical axis in FIG. 13 described above.

### [Table 5]

**Table 5**

| | | Position in Thickness Direction (Normalization) | Stress [MPa] | | | |
|---|---|---|---|---|---|---|
| | | | Forming Bottom Dead Center | Immediately after SB | Stress Relaxation Amount | After Stress Relaxation |
| Outer Side of Bending ↑ ↓ Inner Side of Bending | First Layer | 1.00 | 1353 | -354 | 45 | -309 |
| | Second Layer | 0.67 | 1320 | 117 | 33 | 150 |
| | Third Layer | 0.33 | 1253 | 568 | 13 | 581 |
| | Fourth Layer | 0.00 | 501 | 384 | 3 | 387 |
| | Fifth Layer | -0.33 | -1320 | -818 | -12 | -831 |
| | Sixth Layer | -0.67 | -1386 | -284 | -32 | -316 |
| | Seventh Layer | -1.00 | -1353 | 401 | -55 | 346 |

As illustrated in Table 5, for example, since the residual stress immediately after springback of the first layer on the outer side of bending is -354 MPa and the stress relaxation amount is +45 MPa, the residual stress after stress relaxation is -309 MPa, which is obtained by adding +45 MPa to -354 MPa.

Then, for the plate press-bend-formed part model 63 in which the value of the residual stress after stress relaxation was set at the respective portions in the thickness direction of the first to seventh layers, mechanical calculations was performed to obtain the shape in which the moments of forces are balanced. Furthermore, the shape change of the side wall portion 35 of the plate press-bend-formed part 31 was predicted from the shape of the plate press-bend-formed part model 63 obtained by the mechanical calculations.

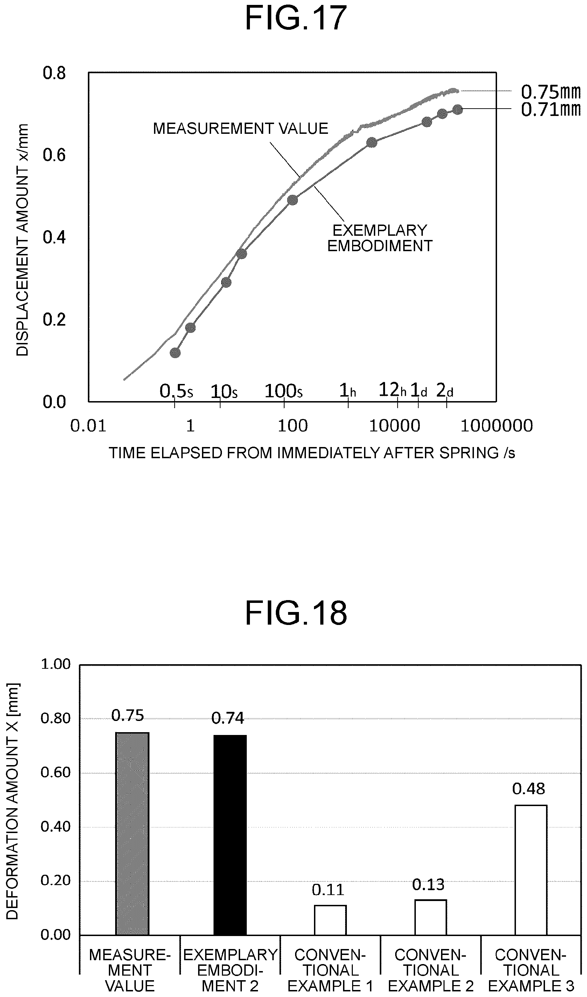

FIG. 17 illustrates the prediction result of the shape change of the side wall portion 35 of the plate press-bend-formed part 31 due to stress relaxation immediately after the springback and the measurement result of the deformation amount of the side wall portion 35 of the plate press-bend-formed part 31 that was actually press-formed.

As illustrated in FIG. 17, the prediction result of the deformation amount due to stress relaxation and the tendency of the temporal change of the measurement result are in good agreement. In addition, a deformation amount x of stress relaxation was 0.71 mm for the prediction value (prediction accuracy of 95%), whereas the measured value was 0.75 mm. A difference of 0.04 mm between the two was smaller than the dimensional accuracy generally required for a press formed part (within ±0.5 mm).

From the above results, it was shown that the shape change of a press formed part predicted by the press formed part shape change predicting method according to the present invention has practically sufficient accuracy.

### [Example 2]

In Example 2, in the press formed part shape change predicting method according to the present invention, the residual stress after stress relaxation was set by a method different from that in Example 1, and the shape change of the press formed part after springback was predicted.

In Example 2, as the stress relaxation amount at each of the portions in the thickness direction of the bent portion 65 of the plate press-bend-formed part model 63 targeted in Example 1, a value obtained by multiplying the stress change amount before and after springback at each of the portions in the thickness direction by the predetermined value a was set. Since the plate press-bend-formed part 31 is obtained by press-forming a steel sheet, the predetermined value a used for calculation of the stress relaxation amount was set to a = 0.025 from the result illustrated in FIG. 7 (Exemplary Embodiment 2).

In addition, for comparison, a value of residual stress in which the residual stress is relaxed and reduced by a predetermined ratio (uniformly by 15%) from the residual stress after springback was set in accordance with the method disclosed in Patent Literature 4 described above, which was compared with Exemplary Embodiment 2 and examined (Conventional Examples).

In Conventional Examples, the portions in the thickness direction of the bent portion 65 reflecting the stress relaxation amount in the plate press-bend-formed part model 63 are changed. The residual stress is relaxed and reduced in all the portions of the first to seventh layers in the thickness direction in the bent portion 65 in Conventional Example 1, the residual stress is relaxed and reduced in portions of the three layers (first to third layers) on the outer side of bending in Conventional Example 2, and the residual stress is relaxed and reduced in a portion of only the outermost layer (first layer) on the outer side of bending in Conventional Example 3.

Table 6 shows the stress (at the forming bottom dead center and immediately after springback), the stress change (= (stress at forming bottom dead center) - (residual stress immediately after springback)), the stress relaxation amount (= 0.025 × stress change), and the residual stress after stress relaxation in each of the portions in the thickness direction in Exemplary Embodiment 2.

### [Table 6]

**Table 6**

| | | Position in Thickness Direction (Normalization) | Stress [MPa] | | | | |
|---|---|---|---|---|---|---|---|
| | | | Forming Bottom Dead Center | Immediately after SB | Stress Change | Stress Relaxation Amount | After Stress Relaxation |
| Outer Side of Bending ↑ ↓, Inner Side of Bending | First Layer | 1.00 | 1353 | -354 | 1707 | 42 | -312 |
| | Second Layer | 0.67 | 1320 | 117 | 1203 | 29 | 146 |
| | Third Layer | 0.33 | 1253 | 568 | 685 | 17 | 585 |
| | Fourth Layer | 0.00 | 501 | 384 | 117 | 3 | 387 |
| | Fifth Layer | -0.33 | -1320 | -818 | -501 | -12 | -831 |
| | Sixth Layer | -0.67 | -1386 | -284 | -1102 | -27 | -311 |
| | Seventh Layer | -1.00 | -1353 | 401 | -1754 | -43 | 358 |

FIG. 18 illustrates a measurement value and prediction results (Exemplary Embodiment 2 and Conventional Examples) of the deformation amount x (corresponds to the shape after stress relaxation after the lapse of two days from immediately after springback) due to the shape change after stress relaxation. As described above, the deformation amount of the side wall portion 35 due to stress relaxation in the plate press-bend-formed part 31 actually bent was 0.75 mm. The deformation amount of Exemplary Embodiment 2 was 0.74 mm, and the difference from the actually measured deformation amount was 0.01 mm (1.3%). On the other hand, the deformation amounts in Conventional Example 1, Conventional Example 2, and Conventional Example 3 were 0.11 mm, 0.13 mm, and 0.48 mm, respectively, and the difference from the actually measured deformation amount was larger than that from Exemplary Embodiment 2. From this result, the method according to the present invention shows good prediction accuracy for the shape change after springback and is improved from Conventional Examples.

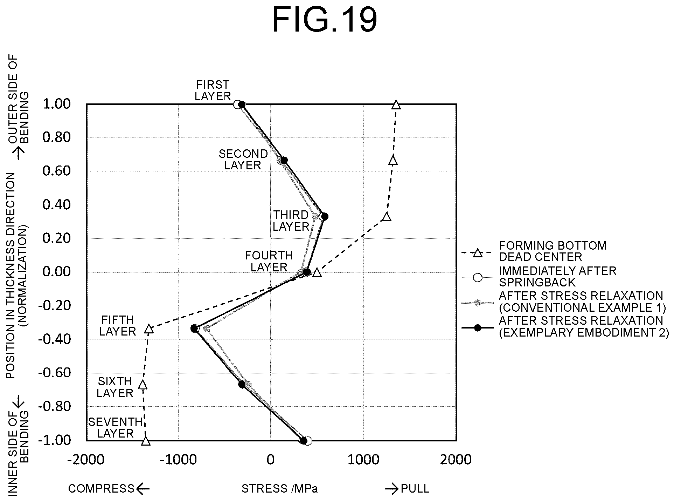

FIG. 19 illustrates the distribution of the residual stress in the thickness direction after stress relaxation in Exemplary Embodiment 2 and Conventional Example 1. In FIG. 19, the vertical axis is obtained by normalizing the positions of the respective layers in the thickness direction, similarly to the vertical axis in FIG. 13 described above.

In Exemplary Embodiment 2, as illustrated in Table 5, the magnitudes of the stress relaxation amount of the outermost layers (first and seventh layers) on the outer side of bending and the inner side of bending are large, and the stress relaxation amount becomes smaller as it is closer to the center in the thickness direction. As a result, it can be seen that the stress is relaxed in a direction in which the residual stress immediately after the springback approaches the residual stress at the forming bottom dead center.

Meanwhile, in Conventional Example 1, the stress relaxation amounts of the third layer and the fifth layer (sites at about 1/4 of the sheet thickness from the outermost layers) are large, and the direction in which the stress is relaxed is also opposite to that in Exemplary Embodiment 2 and is also different from the result of the stress relaxation test illustrated in FIG. 3 described above. Therefore, it is found that it is necessary to adjust the ratio of relaxation and reduction of the residual stress for each of the portions in the press formed part in such a manner as to match the shape change immediately after springback of the actual press formed part.

From the above, it is shown that the press formed part shape change predicting method according to the present invention can accurately predict the shape change of the press formed part due to stress relaxation with the lapse of time after springback.

### [Example 3]

In Example 3, for a press formed part different from Examples 1 and 2, the residual stress after stress relaxation was set as in Example 2, whereby the shape change of the press formed part after springback was predicted.

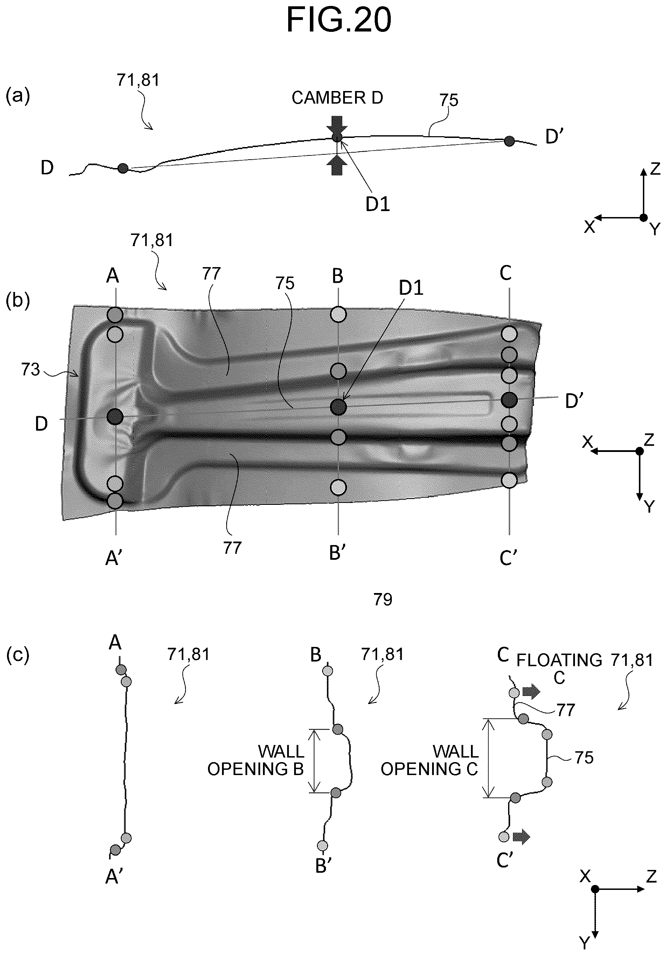

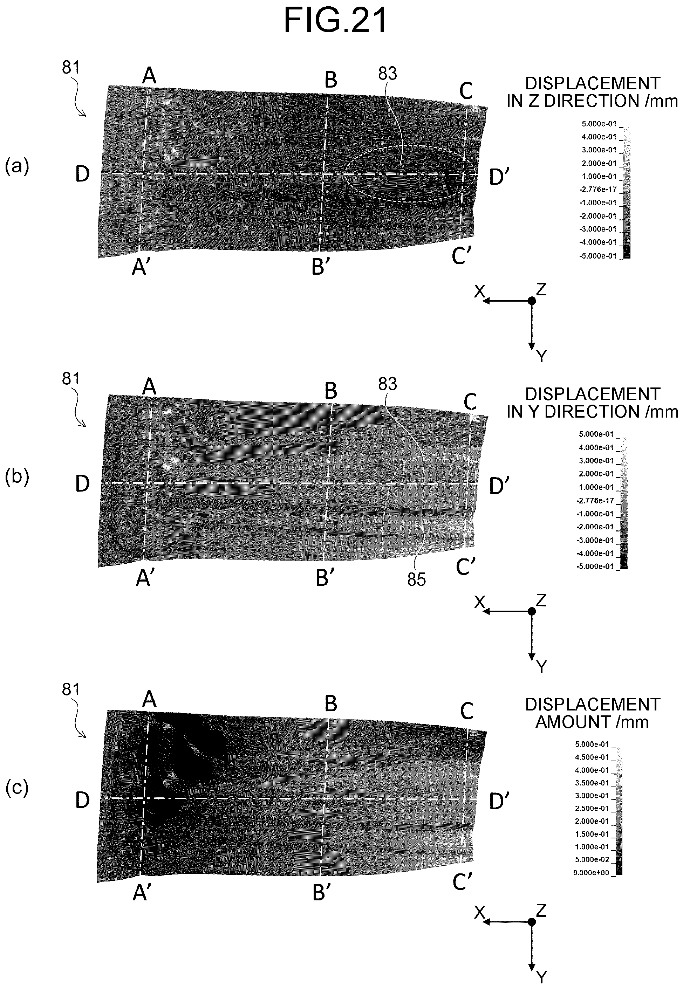

As illustrated in FIG. 20, the press formed part targeted in Example 3 was the B-pillar part 71 of an automotive body having a bulge forming portion 73 having a substantially T-shape in plan view. The B-pillar part 71 has a hat-shaped cross section (see FIG. 20(c)) and warps convexly upward in a longitudinal direction (see FIG. 20(b)). In FIG. 20, the X direction is the longitudinal direction of the B-pillar part 71, the Y direction is a lateral direction of the B-pillar part 71, and the Z direction is a direction perpendicular to the horizontal plane of the B-pillar part 71 (the same applies to FIG. 21 described later).

In Example 3, a steel sheet of 1180 MPa-grade was used to perform a press forming test (deep drawing) on the B-pillar part 71, and then shape measurement was continuously performed at regular time intervals with a three-dimensional shape measurement instrument.

Deformation due to springback in the B-pillar part 71 can be roughly classified into wall opening deformation (wall opening) of a cross section, camber deformation (camber), and floating of a flange portion of a cross section. Therefore, regarding the shape change with the lapse of time after springback, the wall opening, the camber, and the floating were each evaluated for each specific portion illustrated in FIG. 20.

Regarding the wall opening deformation of the cross section, as illustrated in FIG. 20(c), wall opening deformation (wall opening B) in a cross section B-B' and wall opening deformation (wall opening C) in a cross section C-C' were evaluated. As for the camber deformation, as illustrated in FIG. 20(a), the camber deformation (camber D) at an intersection position D1 between the cross section B-B' and a cross section D-D' in a top portion 75 was evaluated. With respect to the floating of the flange portion of the cross section, as illustrated in FIG. 20(c), floating deformation (floating C) of the flange portion 77 in the cross section C-C' was evaluated. Then, the relationships between the elapsed time after die release and each of the wall opening B, the wall opening C, the camber D, and the floating C were measured from 4 minutes after the B-pillar part 71 was released from the press forming die.

Subsequently, the shape change of the B-pillar part 71 after the springback was predicted by the following procedure (Exemplary Embodiment 3).

First, a press forming analysis using the finite element method in the process of press forming the B-pillar part 71 illustrated in FIG. 20 was performed to acquire the stress and the strain at the forming bottom dead center of a B-pillar model 81 obtained by modeling the B-pillar part 71 by the finite-element analysis.

Next, a spring-back analysis was performed on the process in which the B-pillar model 81 released from a press forming die model springs back using the finite element method, and the residual stress and the strain in the B-pillar model 81 immediately after the springback were acquired.

Subsequently, as the stress relaxation amount at each of the portions in the thickness direction of the B-pillar model 81, a value obtained by multiplying the stress change amount before and after springback at each of the portions in the thickness direction by a predetermined value a was set. Since the B-pillar model 81 is obtained by press-forming a steel sheet, the predetermined value a used for calculation of the stress relaxation amount was set to a = 0.025 from the result illustrated in FIG. 7 described earlier.

Then, mechanical calculations to obtain the shape in which the moments of forces are balanced were performed for the B-pillar model 81 in which the stress relaxation amount was set, and a shape change due to stress relaxation with the lapse of time was predicted.

Also for the prediction result of the shape change due to stress relaxation with the lapse of time of the B-pillar model 81, similarly to the actually pressformed B-pillar part 71, the wall openings B and C, the camber D, and the floating C were evaluated.

FIG. 21 illustrates a result of predicting a shape change of the B-pillar model 81 due to stress relaxation with the lapse of time. FIG. 21(a) illustrates the deformation amount in the Z direction (a direction perpendicular to the horizontal plane of the B-pillar model 81), FIG. 21(b) illustrates the deformation amount in the Y direction (a lateral direction of the B-pillar model 81), and FIG. 21(c) illustrates the shifted distance (displacement amount) of each element of the B-pillar model 81 from immediately after the springback.

The change amount due to stress relaxation with the lapse of time in the B-pillar model 81 was large on the long side (between B-B' and C-C') having a substantially T-shape in plan view. This is because a top portion 83 (within the broken-line circular frame in FIG. 21(a)) in the corresponding region was recessed in the Z direction, and a shape change expanding in the Y direction occurred in a flange portion 85 (within the broken-line circular frame in FIG. 21(b)) from the top portion 83.

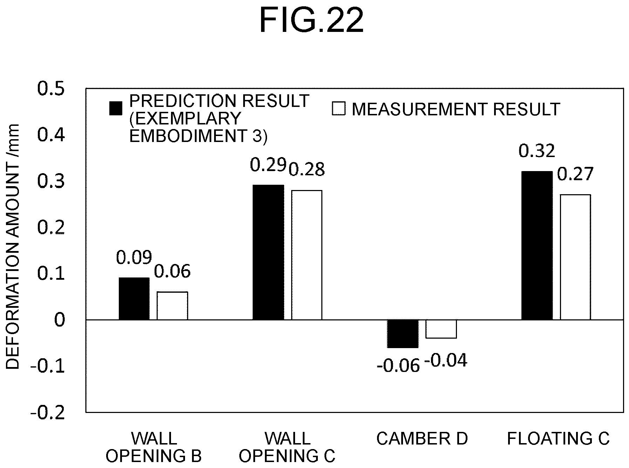

FIG. 22 illustrates measurement results and prediction results (Exemplary Embodiment 3) of the deformation amount due to the shape change after stress relaxation of the specific portions to be evaluated (the wall opening B, the wall opening C, the camber D, and the floating C) (corresponding to the shape after stress relaxation after the lapse of two days from immediately after springback). In all of the prediction results of the wall opening B, the wall opening C, the camber D, and the floating C, an error with respect to the measurement result was within ±0.05 mm, which shows good agreement with the measurement results.

Therefore, it is shown that the press formed part shape change predicting method according to the present invention can accurately predict the shape change of a press formed part due to stress relaxation with the lapse of time after springback even in a case where a B-pillar part of an automotive body is formed into the press formed part.

### [Example 4]

In Example 4, the plate press-bend-formed part 31 illustrated in FIG. 2 was manufactured by the press formed part manufacturing method according to the present invention, and the dimensional accuracy thereof was examined. In Example 4, as in Example 1 and Example 2 described above, a super high tension steel sheet having a rectangular shape with a width of 90 mm, a length of 130 mm, and a sheet thickness of 1.2 mm, having the mechanical properties of Table 4, and having a tensile strength of 1180 MPa-grade with a large shape change after springback was used as the metal sheet.

Then, as illustrated in FIG. 2, first, (a) the metal sheet 21 was placed on the die 15 having the shoulder part 15a having a predetermined radius (6 mm). Then, (b) by pushing down the punch 13, the metal sheet 21 was bend-formed into the plate press-bend-formed part 31 along the shoulder part 15a of the die by setting a target for the bending angle of the bent portion 33 (angle on the acute angle side with respect to the horizontal direction) to 75° and a length of the side wall portion to 100 mm.

A target dimensional accuracy (predetermined range set in advance) of the plate press-bend-formed part 31 was set to be within ±0.50 mm.

As a provisional press forming condition of the plate press-bend-formed part 31, the press forming die 11 (the die 15 and the punch 13) was prepared in consideration of predicted correction of a springback amount of 18 mm for the bending angle of the bent portion 33, and the bending angle of the bent portion 33 was set to 85.5°. Furthermore, the radius of the die shoulder part was set to 6 mm, and the clearance (gap) between the punch 13 and the die 15 was set to 1.2 mm which was the same as the sheet thickness.

Subsequently, as in Example 1, by the press formed part shape change predicting method according to the first embodiment, the shape change of the plate press-bend-formed part 31 due to stress relaxation after springback at the moment of release from the press forming die was predicted. The prediction result of the deformation amount of the side wall portion 35 of the plate press-bend-formed part 31 was +0.64 mm.

This prediction result was determined to be out of the range of the target dimensional accuracy of ±0.50 mm.

Therefore, in order for the shape of the press formed part after stress relaxation to satisfy the target dimensional accuracy, the bending angle of the bent portion 33, which is the provisional press forming condition, was changed to 85.8° in consideration of the shape change (+0.64 mm) due to stress relaxation.

Then, the provisional press forming condition was changed to one in which the bending angle of the bent portion 33 is 85.8° and the other press forming conditions (radius of the die shoulder part and the clearance between the punch and the die) are the same.

Next, under the changed provisional press forming conditions, an L bending test was actually performed by setting the bending angle of the bent portion 33 to 85.8° to press-form the plate press-bend-formed part 31 by using a 1180 MPa-grade steel sheet having a width of 90 mm, a length of 130 mm, and a sheet thickness of 1.2 mm a blank (Exemplary Embodiment 4).

Furthermore, for comparison, an L bending test using a press forming die having a bending angle of the bent portion 33 of 85.3° was also performed to press-form the plate press-bend-formed part 31 (Comparative Example). In each of Exemplary Embodiment 4 and Comparative Example, after released from the press forming die and springback, the plate press-bend-formed part 31 was left for two days, and the deformation amount of the side wall portion 35 was measured.

In Exemplary Embodiment 4, the deviation of the side wall portion 35 from the target shape was 0.02 mm, which was within the range of the target dimensional accuracy (±0.50 mm). On the other hand, in the comparative example, the deviation of the side wall portions 35 from the target shape was +0.62 mm, which was out of the range of the target dimensional accuracy (±0.50 mm).

As a result, it is shown that the press formed part manufacturing method according to the second embodiment of the present invention is capable of manufacturing a press formed part having good dimensional accuracy.

### Industrial Applicability

According to the present invention, it is possible to provide a press formed part shape change predicting method, a device, and a program capable of accurately predicting a shape change with the lapse of time in a press formed part after springback. Furthermore, according to the present invention, it is possible to provide the press formed part manufacturing method capable of manufacturing a press formed part having good dimensional accuracy based on prediction of shape change of the press formed part due to stress relaxation with time after springback.

### Reference Signs List

1 SHAPE CHANGE PREDICTING DEVICE
3 FORMING BOTTOM DEAD CENTER STRESS AND STRAIN ACQUIRING UNIT
5 IMMEDIATELY-AFTER-SPRINGBACK RESIDUAL STRESS AND STRAIN ACQUIRING UNIT
7 POST-STRESS RELAXATION RESIDUAL STRESS SETTING UNIT
9 POST-STRESS RELAXATION SHAPE ANALYZING UNIT
11 PRESS FORMING DIE 13 PUNCH
15 DIE
15a SHOULDER PART OF A DIE
17 PRESSURE PAD
21 METAL SHEET
31 PLATE PRESS-BEND-FORMED PART
33 BENT PORTION
35 SIDE WALL PORTION
37 TOP PORTION
41 TEST PIECE
43 RETAINING PORTION
51 LASER DISPLACEMENT METER
61 PRESS FORMING DIE MODEL
63 PLATE PRESS-BEND-FORMED PART MODEL
65 BENT PORTION
71 B-PILLAR PART
73 BULGE FORMING PORTION
75 TOP PORTION
77 FLANGE PORTION
81 B-PILLAR MODEL

## Claims

1. A press formed part shape change predicting method for predicting a shape change of a press formed part due to stress relaxation with a lapse of time after springback at a moment of release from a press forming die, the method comprising:
a forming-bottom-dead-center stress and strain acquiring step of acquiring stress and strain of the press formed part at a forming bottom dead center by performing mechanical calculations of a process of press-forming a metal sheet into the press formed part using the press forming die;
an immediately-after-springback residual stress and strain acquiring step of acquiring residual stress and strain of the press formed part immediately after the springback by performing mechanical calculations of a process in which the press formed part released from the press forming die springs back;
a post-stress relaxation residual stress setting step of setting residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and
a post-stress relaxation shape analysis step of obtaining, by mechanical calculations, a shape in which moments of forces are balanced for the press formed part in which the residual stress after the stress relaxation is set.

2. The press formed part shape change predicting method according to claim 1, wherein, in the post-stress relaxation residual stress setting step,
one or more of a post-tension retention test, a post-tension and unloading retention test, a post-tension unloading and compression retention test, a post-compression retention test, a post-compression and unloading retention test, or a post-compression, unloading, and tension retention test of the metal sheet are combined to perform a stress relaxation test that reproduces a stress-strain change history in an entirety or a portion of the press formed part in the process in which the press formed part springs back, a stress change due to stress relaxation of the metal sheet in the stress relaxation test is measured, and the stress relaxation amount in the entirety or the portion of the press formed part is acquired based on the measured stress change.

3. The press formed part shape change predicting method according to claim 1, wherein, in the post-stress relaxation residual stress setting step,
a difference Δσsb = σp **-** σq between a stress σp before the springback and a stress σq immediately after the springback at the forming bottom dead center is calculated as a stress change amount for the entirety or the portion of the press formed part, and a value obtained by multiplying the calculated stress change amount Δσsb by a predetermined value a is acquired as the stress relaxation amount for the entirety or the portion of the press formed part.

4. The press formed part shape change predicting method according to claim 3, wherein, in the post-stress relaxation residual stress setting step,
a stress relaxation test obtained by combining one or more of a post-tension retention test, a post-tension and unloading retention test, a post-compression retention test, a post-compression and unloading retention test, a post-tension unloading and compression retention test, or a post-compression, unloading, and tension retention test of the metal sheet is performed, a stress change amount Δσ1 in a tensile process or a compression process immediately before the metal sheet is retained and a stress change amount Δσ2 due to stress relaxation in a retention process of the metal sheet are measured, and a ratio Δσ2/Δσ1 between Δσ1 and Δσ2 is set as the predetermined value a.

5. The press formed part shape change predicting method according to claim 3, wherein
the metal sheet is a steel sheet, and
in the post-stress relaxation residual stress setting step, the predetermined value a is set within a range between 0.01 and 0.04**.**

6. A press formed part shape change predicting device for predicting a shape change of a press formed part due to stress relaxation with a lapse of time after springback at a moment of release from a press forming die, the device comprising:
a forming bottom dead center stress and strain acquiring unit configured to acquire stress and strain of the press formed part at a forming bottom dead center by performing mechanical calculations of a process of press-forming a metal sheet into the press formed part using the press forming die;
an immediately-after-springback residual stress and strain acquiring unit configured to acquire residual stress and strain of the press formed part immediately after the springback by performing mechanical calculations of a process in which the press formed part released from the press forming die springs back;
a post-stress relaxation residual stress setting unit configured to set residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and
a post-stress relaxation shape analyzing unit configured to perform mechanical calculations to obtain a shape in which moments of forces are balanced for the press formed part in which the residual stress after the stress relaxation is set.

7. A press formed part shape change predicting program for predicting a shape change of a press formed part due to stress relaxation with a lapse of time after springback at a moment of release from a press forming die, the program causing a computer to function as:
a forming bottom dead center stress and strain acquiring unit configured to acquire stress and strain of the press formed part at a forming bottom dead center by performing mechanical calculations of a process of press-forming a metal sheet into the press formed part using the press forming die;
an immediately-after-springback residual stress and strain acquiring unit configured to acquire residual stress and strain of the press formed part immediately after the springback by performing mechanical calculations of a process in which the press formed part released from the press forming die springs back;
a post-stress relaxation residual stress setting unit configured to set residual stress after stress relaxation by acquiring a stress relaxation amount reflecting a stress-strain change history before and after the springback for an entirety or a portion of the press formed part immediately after the springback and adding the acquired stress relaxation amount to a value of a residual stress of the entirety or the portion of the press formed part immediately after the springback; and
a post-stress relaxation shape analyzing unit configured to obtain, by mechanical calculations, a shape in which moments of forces are balanced for the press formed part in which the residual stress after the stress relaxation is set.

8. A press formed part manufacturing method for manufacturing a press formed part such that a shape of the press formed part that changes due to stress relaxation with a lapse of time after springback at a moment of release from a press forming die falls within a predetermined range, the method comprising:
a provisional press forming condition setting step of setting a provisional press forming condition of the press formed part;
a post-stress relaxation shape acquiring step of obtaining a shape after stress relaxation after being changed by stress relaxation with a lapse of time for the press formed part after springback at the moment when the press formed part has been released from the press forming die by the press formed part shape change predicting method according to any one of claims 1 to 5 based on the provisional press forming condition;
a shape determination step of determining whether or not the obtained shape of the press formed part after stress relaxation is within the predetermined range set in advance;
a provisional press forming condition changing step of changing the provisional press forming condition in a case where it is determined in the shape determination step that the shape of the press formed part after stress relaxation is not within the predetermined range set in advance;
a repetition step of repeatedly executing the provisional press forming condition changing step, the post-stress relaxation shape acquiring step, and the shape determination step until it is determined in the shape determination step that the shape of the press formed part after stress relaxation falls within the predetermined range set in advance;
a press forming condition determining step of determining, as the press forming condition of the press formed part, the provisional press forming condition in a case where it is determined in the shape determination step that the shape of the press formed part after the stress relaxation is within the predetermined range set in advance; and
a press forming step of press-forming the metal sheet into the press formed part under the determined press forming condition.
